# EUROPÄISCHE PATENTSCHRIFT

(11) **EP 3 621 042 B1**
(45) Veröffentlichungstag und Bekanntmachung des Hinweises auf die Patenterteilung: **29.03.2023**
(21) Anmeldenummer: 19192541.1
(22) Anmeldetag: 20.08.2019
(51) Int. Cl.: G07B 15/02, G07C 9/21, G07C 9/28, G06Q 50/30

(54) **KONTROLLVERFAHREN**
CONTROL METHOD
PROCÉDÉ DE VÉRIFICATION

(30) Priorität: 04.09.2018 DE 102018121493
(43) Veröffentlichungstag der Anmeldung: 11.03.2020
(73) Patentinhaber: Scheidt & Bachmann GmbH, 41238 Mönchengladbach (DE)
(72) Erfinder: MILLER, Dr. Norbert, 41063 Mönchengladbach (DE); FEITER, Manfred, 41238 Mönchengladbach (DE); BICHMANN, Dr. Stephan, 52074 Aachen (DE); NOLL, Elmar, 41068 Mönchengladbach (DE)
(74) Vertreter: Cohausz & Florack

(56) Entgegenhaltungen:
- DE-A1-102004 061 180
- FR-A1- 3 053 198
- US-A1- 2014 095 227
- US-A1- 2017 046 681

## Beschreibung

Die Anmeldung betrifft ein Kontrollverfahren zum Überprüfen einer Nutzerberechtigung eines Nutzers für die Inanspruchnahme einer Dienstleistung, insbesondere einer Transportdienstleistung. Darüber hinaus betrifft die Anmeldung ein System, insbesondere ein Transportsystem, eine mobile Inspektionsvorrichtung, ein Verfahren zum Betreiben einer mobilen Inspektionsvorrichtung und eine Dienstleistungsnutzungsanwendung.

Aus dem Stand der Technik sind Kontrollverfahren bekannt, um die Berechtigung eines Nutzers für die Inanspruchnahme einer Dienstleistung zu prüfen. Eine derartige Dienstleitung umfasst vorliegend insbesondere eine Transportdienstleistung, beispielsweise die Nutzung einer Transportvorrichtung, insbesondere eines Fahrzeugs (z.B. Bus, Bahn, Flugzeug, Wasserfahrzeug etc.), aber auch andere Dienstleistungen, wie eine Teilnahme an einer bestimmten Veranstaltung (z.B. Konzert, Theaterstück, Sportveranstaltung etc.).

Um bei konventionellen Personentransportsystemen eine Nutzerberechtigung für die Nutzung einer Transportdienstleistung zu erwerben, kann ein Nutzer, typischerweise vor der Nutzung der Transportdienstleistung, die Nutzerberechtigung beispielsweise durch Kauf eines Tickets erhalten. Beispielhafte und nicht abschließende Nutzerberechtigungen bei Transportsystemen sind Einzel- oder Mehrfachfahrtickets, sowie Zeitfahrkarten, wie beispielsweise Wochen- oder Monatstickets.

Bei derartigen Systemen kann eine Kontrolle der Nutzerberechtigung eine physische Kontrolle umfassen, indem beispielsweise eine Durchgangssperre vorgesehen ist. Die Durchgangssperre ist eingerichtet, nur bei Vorlage einer gültigen Nutzerberechtigung den Zugang zu einer Transportvorrichtung zu ermöglichen. Auch kann vorgesehen sein, dass die Nutzerberechtigung, durch einen Kontrolleur, während der Inanspruchnahme der Transportdienstleistung auf ihre Gültigkeit hin überprüft wird. Bei einem derartigen Ticketsystem ist insbesondere wesentlich, dass der Nutzer vor der Nutzung der Dienstleistung eine Nutzerberechtigung erwirbt und insbesondere bezahlt sowie diese während der Nutzung der Dienstleistung bei sich trägt.

In der heutigen Zeit werden vermehrt Ticketsysteme für Transportdienstleistungen, aber auch für oben genannte Veranstaltungsdienstleistungen, eingesetzt, in denen elektronische Nutzerberechtigungen erworben und bereitgestellt werden. Hierzu kann eine Nutzerberechtigung in Form einer Nutzerberechtigungsinformation, insbesondere als elektronisches Ticket, auf ein mobiles Nutzerendgerät des Nutzers übertragen werden. Dieses kann dann von dem Nutzer an einer Durchgangssperre präsentiert werden und/oder von einem Kontrolleur, beispielsweise unter Nutzung einer mobilen Inspektionsvorrichtung, überprüft werden.

Beispielsweise kann ein gespeichertes Ticket durch ein grafisches Anzeigemodul in Form eines optischen Codes (z.B. Barcode oder QR-Code) angezeigt werden, der von der Inspektionsvorrichtung drahtlos ausgelesen werden kann. Auch kann das gespeicherte Ticket in einem Datenspeicher des mobilen Nutzerendgerätes gespeichert sein und z.B. über Funkkommunikation (z.B. Bluetooth, WLAN oder NFC) auslesbar sein. Insbesondere kann hierdurch ein Ticketdatensatz ausgelesen und, durch die Inspektionsvorrichtung, mit zulässigen Referenzticketdatensätzen verglichen werden, um festzustellen, ob der Nutzer zur Inanspruchnahme einer augenblicklichen Transportdienstleistung berechtigt ist (berechtigen beispielsweise die ausgelesenen Ticketdaten den Nutzer, die vorliegende Transportvorrichtung in der vorliegenden Klasse zu verwenden?). Der Ausleseprozess sowie der Abgleich der Daten ist jedoch mit einem erheblichen Zeitaufwand verbunden und reduziert zudem den Nutzerkomfort.

Um die Nutzerfreundlichkeit weiter zu verbessern, sind aus dem Stand der Technik ferner "ticketlose" Transportsysteme, auch Raumerfassungssysteme genannt, bekannt, bei denen die Nutzung einer Transportdienstleistung durch geeignete Erfassungsmittel erfasst und entsprechend der Nutzung abgerechnet wird. Insbesondere kann bei einem derartigen Transportsystem der Erwerb der Nutzerberechtigung in Form eines Tickets vor der Nutzung der Dienstleistung entfallen. Auch ist es möglich, dass zuvor erworbene Fahrtberechtigungen in Raumerfassungssystemen genutzt und die Gültigkeit dieser Fahrtberechtigungen hinsichtlich der genutzten Verkehrsmittel, der gefahrenen Strecke oder auch des Zeitpunktes der Nutzung kontrolliert werden.

In der Regel ist es bei einem derartigen Transportsystem zunächst erforderlich, dass der Nutzer sich bei diesem System vor der erstmaligen Nutzung einer Transportdienstleistung registriert. Bei einer erfolgreichen (konventionellen) Registrierung wird in dem Transportsystem, insbesondere einem Hintergrundsystem (auch Backendsystem genannt) des Transportsystems, ein Nutzerkonto für den registrierten Nutzer angelegt, indem Nutzerdaten, wie eine eindeutige Nutzerkennung (ID) des Nutzers, und Abrechnungsdaten, z.B. Kreditkartendaten oder Kontoverbindungen, Adressdaten oder sonstige Informationen für die Abrechnung, in dem Hintergrundsystem gespeichert werden.

Für eine Nutzung einer Transportdienstleistung führt der registrierte Nutzer ein (registriertes) mobiles Nutzerendgerät mit sich. Die von dem Nutzer zu verwendende Transportvorrichtung weist eine Erfassungseinrichtung mit einem Kommunikationsmodul auf, um die Anwesenheit des mobilen Nutzerendgeräts in der Transportvorrichtung während der Inanspruchnahme der Transportdienstleistung zu erfassen. Beispielsweise können hierfür Anwesenheitsnachrichten zwischen dem mobilen Nutzerendgerät und der Erfassungseinrichtung ausgetauscht werden.

Um dies zu ermöglichen, ist in der Regel auf dem mobilen Nutzerendgerät eine Dienstleistungsnutzungsanwendung, insbesondere eine Raumerfassungsanwendung, installiert, die in dem zahlungspflichtigen Raum für die in Anspruch genommene Dienstleistung den Austausch der Anwesenheitsnachrichten steuert.

Bevor die Anwesenheitsnachrichten ausgetauscht werden können, sind normalerweise eine Aktivierung der Raumerfassungsanwendung und eine (erfolgreiche) Anmeldung, insbesondere an dem Hintergrundsystem des Transportsystems, erforderlich. Das Hintergrundsystem kann Komponenten innerhalb des Transportmittels (wie z.B. Bordrechner), aber auch Komponenten an zentralen Stellen (z.B. Rechenzentren) umfassen. Wenn die Raumerfassungsanwendung aktiviert ist, können die An- und Abmeldung an dem Hintergrundsystem automatisch erfolgen (so genanntes Be-In-Be-Out-System, "BIBO") oder zumindest teilweise durch mindestens eine Nutzeraktion (sogenanntes Check-In-Be-Out System, "CIBO" oder sogenanntes Check-In/Check-Out System, "CICO"). Nach einer Abmeldung kann dann das Hintergrundsystem bzw. der Server eine Abrechnung der von dem Nutzer in Anspruch genommene Dienstleistung durchführen, basierend auf der erfassten Nutzung (z.B. Nutzungsdauer, zurückgelegte Strecke etc.) und den in dem Nutzerkonto gespeicherten Nutzerdaten.

Wesentlich für eine berechtigte Nutzung eines Raumerfassungssystems ist, dass das mobile Nutzerendgerät (bzw. der das mobile Nutzerendgerät betreibende Nutzer) es zulässt, dass die Anwesenheit des mobilen Nutzerendgeräts in dem zahlungspflichtigen Raum (z.B. Transportvorrichtung, Veranstaltungsbereich etc.) tatsächlich von Beginn bis Ende der Nutzung der Dienstleistung, also von einem Eintritt in den Raum bis zu einem Austritt aus dem Raum, erfasst und aufgezeichnet wird. Ein Nutzer mit betrügerischer Absicht kann den Austausch der Anwesenheitsnachrichten bzw. der hierfür genutzten Funksignale unterbinden, indem er beispielsweise sein mobiles Nutzerendgerät ausschaltet, es funktechnisch abschirmt und/oder eine Raumerfassungsanwendung nicht aktiviert.

Um auch bei einem Raumerfassungssystem eine Überprüfung einer berechtigten Nutzung der in Anspruch genommenen Dienstleistung zu ermöglichen, kann in dem mobilen Nutzerendgerät eine Nutzerberechtigungsinformation verfügbar sein. Beispielsweise kann bei einer erfolgreichen Anmeldung an dem Hintergrundsystem eine gültige Nutzerberechtigungsinformation in Form eines entsprechenden Gültigkeitszustands gespeichert sein, während bei einer unterbliebenen Anmeldung eine ungültige Nutzerberechtigungsinformation (beispielsweise in Form eines nicht vorhandenen Gültigkeitszustands) verfügbar sein kann.

Insbesondere kann nach einer oben beschriebenen erfolgreichen Anmeldung eine gültige Nutzerberechtigungsinformation auf dem mobilen Nutzerendgerät verfügbar sein, indem eine entsprechende Information in einem Speichermodul des Nutzerendgeräts gespeichert wird. Beispielsweise kann ein entsprechender Gültigkeitszustand in Form einer Quittungsnachricht von dem Hintergrundsystem an das mobile Nutzerendgerät übertragen werden. Diese Quittungsnachricht kann dann als Nutzerberechtigungsinformation in dem mobilen Nutzerendgerät gespeichert werden.

Zur Überprüfung einer berechtigten Nutzung einer Dienstleistung in einem Raumerfassungssystem sind Kontrollverfahren erforderlich, die insbesondere anhand der verfügbaren Nutzerberechtigungsinformation eine Unterscheidung zwischen ordnungsgemäß betriebenen und nicht ordnungsgemäß betriebenen, insbesondere betrügerisch betriebenen, mobilen Nutzerendgeräten ermöglichen.

Aus der Druckschrift DE 10 2004 061 180 A1 ist ein Kontrollverfahren bekannt, bei dem sämtliche mobile Nutzerendgeräte, die in einem zahlungspflichtigen Raum, der durch eine Transportvorrichtung gebildet ist, legitim bzw. ordnungsgemäß genutzt werden, bei Beginn der Kontrolle durch die Erfassungseinrichtung der Transportvorrichtung einen Kontrollcode empfangen. Bei einem Empfang wird insbesondere ein grafisches Inspektionsmerkmal durch ein erstes Anzeigemodul des mobilen Nutzerendgeräts angezeigt, basierend auf dem empfangenen Kontrollcode und der in dem Nutzerendgerät verfügbaren Nutzerberechtigungsinformation. Beispielsweise kann als gültiges Inspektionsmerkmal ein grüner Bildschirm bei einer verfügbaren gültigen Nutzerberechtigungsinformation und als ungültiges Inspektionsmerkmal ein roter Bildschirm bei einer verfügbaren ungültigen Nutzerberechtigungsinformation durch das erste Anzeigemodul angezeigt werden. Der Kontrolleur kann nun in einfacher Weise, z.B. visuell, die Berechtigung der Nutzer zur Nutzung der Dienstleistung überprüfen.

Als nachteilig an dem bekannten Kontrollverfahren ist vorliegend erkannt worden, dass dieses Verfahren nicht schützt vor einem Betrug durch Kopieren des gültigen Inspektionsmerkmals. So ist es bei heutigen mobilen Nutzerendgeräten, wie beispielsweise Smartphones, möglich, einen Screenshot (oder eine Screen Video Recorder-Aufnahme) von dem Bildschirm zu tätigen und dieses Bild (oder grafische Sequenz bzw. Filmsequenz) drahtlos an weitere mobile Nutzerendgeräte zu übertragen. Diese können dann das empfangene Bild (oder grafische Sequenz bzw. Filmsequenz), also das gültige Inspektionsmerkmal, durch das erste Anzeigemodul anzeigen. Der Inspektor bzw. Kontrolleur wird ein entsprechendes mobiles Nutzerendgerät daher als gültig wahrnehmen, obwohl es sich um ein illegitim genutztes mobiles Nutzerendgerät handelt.

Ferner offenbart die Druckschrift US 2014/0095227 A1 ein Kontrollverfahren zum Überprüfen einer Nutzerberechtigung eines Nutzers für die Inanspruchnahme einer Dienstleistung, wobei eine mobile Inspektionsvorrichtung verwendet wird. Aus der Druckschrift der US 2017/0046681 A1 ist ein Verfahren zum Überprüfen einer Nutzerberechtigung eines Nutzers für die Inanspruchnahme einer Dienstleistung bekannt, insbesondere einer Transportdienstleistung, bei dem ein Transitcomputer einen graphischen Indikator an ein mobiles Endgerät und an eine mobile Inspektionsvorrichtung sendet. Schließlich betrifft die Druckschrift FR 3 053 198 A1 ein Kontrollverfahren zum Überprüfen einer Nutzerberechtigung eines Nutzers für die Inanspruchnahme einer Dienstleistung.

Daher liegt der Anmeldung die Aufgabe zugrunde, ein Kontrollverfahren zum Überprüfen einer Nutzerberechtigung eines Nutzers für die Inanspruchnahme einer Dienstleistung, insbesondere einer Transportdienstleistung, bereitzustellen, welches einen verbesserten Schutz vor einem Betrug ermöglicht und gleichzeitig insbesondere einen hohen Nutzerkomfort bietet sowie eine einfache Überprüfung einer Nutzerberechtigung erlaubt.

Die Aufgabe wird gemäß einem ersten Aspekt der Anmeldung durch ein Kontrollverfahren zum Überprüfen einer Nutzerberechtigung eines Nutzers für die Inanspruchnahme einer Dienstleistung, insbesondere einer Transportdienstleistung, nach Anspruch 1 gelöst. Das Kontrollverfahren umfasst:
- Aussenden, durch eine mobile Inspektionsvorrichtung, mindestens eines ersten Inspektionsdatensatzes während einer ersten Sendephase,
- Empfangen, durch mindestens ein zu kontrollierendes mobiles Nutzerendgerät, des mindestens einen ersten Inspektionsdatensatzes
- Ausgeben, durch mindestens ein erstes Ausgabemodul des mobilen Nutzerendgeräts, mindestens eines ersten Inspektionsmerkmals während der ersten Sendephase, basierend auf dem empfangenen ersten Inspektionsdatensatz und mindestens einer in dem mobilen Nutzerendgerät verfügbaren Nutzerberechtigungsinformation,
- Ausgeben, durch mindestens ein zweites Ausgabemodul der mobilen Inspektionsvorrichtung, mindestens eines ersten zu dem ersten Inspektionsdatensatz korrespondierenden Gültigkeitsmerkmals während der ersten Sendephase.

Indem im Gegensatz zum Stand der Technik anmeldungsgemäß ein Ausgeben von entsprechend variablen (gültigen) Inspektionsmerkmalen durch das mindestens eine zu kontrollierenden mobilen Nutzerendgerät derart gestaltet wird, dass ein Kopieren (z.B. per Bildschirmfoto oder Screen Video Recorder) und Weiterleiten von variablen (gültigen) Inspektionsmerkmalen nicht mehr praktikabel ist, wird die Manipulationssicherheit erhöht. Dazu sendet eine Inspektionsvorrichtung (oder die Erfassungseinrichtung des zahlungspflichtigen Raums) zumindest einen ersten Inspektionsdatensatz aus, um ein Ausgeben von entsprechend variablen (gültigen) Inspektionsmerkmalen durch das mindestens eine zu kontrollierende mobile Nutzerendgerät zu bewirken. So kann z.B. das Empfangen eines ersten Inspektionsdatensatzes auf den mobilen Nutzerendgeräten, die gültig benutzt werden, zum Beispiel das (periodische) Abspielen einer ersten grafischen Sequenz als erstes Inspektionsmerkmal auslösen. Dabei kann die erste grafische Sequenz insbesondere so gestaltet sein, dass sich für die erwartete Dauer eines Inspektionsprozesses (beispielsweise: bis zu 10 Minuten) keine Bildfolgen wiederholen; damit ist es für Betrugsversuche nicht praktikabel, die erste grafische Sequenz aufzunehmen und an einen weiteren (betrügerischen) Nutzer weiterzuleiten. Zeitgleich wird vorzugsweise die erste grafische Sequenz auf der mobilen Inspektionsvorrichtung als erstes Gültigkeitsmerkmal angezeigt. Damit wird ein einfach durchzuführender und nutzerfreundlicher Inspektionsprozess durch das anmeldungsgemäße Kontrollverfahren bereitgestellt, indem eine Berechtigung eines Nutzers überprüft werden kann durch einen Vergleich der während der jeweiligen Sendephase von dem mindestens einen mobilen Nutzerendgerät und der mindestens einen mobilen Inspektionsvorrichtung ausgegebenen Inspektionsmerkale bzw. Gültigkeitsmerkmale. Diese Kontrolle gestaltet sich für den Prüfer insbesondere dann einfach und schnell, wenn sie auf der Gleichartigkeit, insbesondere optischen Gleichartigkeit, von Inspektionsmerkmal auf dem mobilen Endgerät und Gültigkeitsmerkmal auf dem Kontrollgerät beruht.

Wesentlicher Inhalt des ersten Inspektionsdatensatzes kann insbesondere die Identifikation der variablen (gültigen) Inspektionsmerkmale, die auf dem mindestens einen mobilen Nutzerendgerät zur Ausgabe gebracht werden sollen. Die Sicherheit des anmeldungsgemäßen Kontrollverfahrens kann dabei erhöht werden, wenn nach dem ersten Inspektionsdatensatz ein zweiter Inspektionsdatensatz ausgesendet wird, der, nach dem Empfangen, auf den mobilen Nutzerendgeräten, die gültig benutzt werden, insbesondere das (periodische) Ausgaben einer zweiten grafischen Sequenz als (gültiges) zweites Inspektionsmerkmal auslöst, die von der ersten grafischen Sequenz unterschieden ist. Gleichzeitig kann eine zweite grafische Sequenz auf der mobilen Inspektionsvorrichtung als zweites Gültigkeitsmerkmal ausgegeben. In diesem Fall können die jeweiligen Dauern/Sendephasen der grafischen Sequenzen deutlich kürzer sein. Bei dieser Ausführungsform kann die Nicht-Kopierbarkeit des (gültigen) Inspektionsmerkmals nicht durch die Länge (genau) einer Sequenz, die in etwas so lang sein muss wie ein Inspektionsprozess potenziell dauert, sondern dadurch bereitgestellt werden, dass mehrere (kürzere) Inspektionsmerkmale, insbesondere Sequenzen, ausgegeben werden, vorzugsweise simultan auf dem mobilen Nutzerendgerät und der Inspektionsvorrichtung ausgegeben werden. Anmeldungsgemäß kann das (gültige) Inspektionsmerkmal auch aus statischen Merkmalsattributen gebildet sein (beispielsweise Bilder oder Farben), wenn nur sichergestellt ist, dass die Merkmalsattribute häufig genug gewechselt werden, um insbesondere ein Kopieren und Weiterleiten sinnlos für einen Betrugsversuch zu machen.

Weiter vorteilhaft kann beispielsweise eine sich über die Zeit ändernde Abfolge von optischer Mustern als Inspektionsmerkmal vorgesehen sein, welche über Zeitstempel und/oder Sequenznummern verfügen können, wobei die Inspektionsvorrichtung kontinuierlich die gerade aktuell anzuzeigenden Zeitpunkte und/oder Sequenznummern an das mindestens eine mobile Nutzerendgerät aussenden kann. Sowohl die Inspektionsvorrichtung als auch das mobile Nutzerendgerät können beispielsweise die hiermit referenzierten optischen Muster zeitgleich an ihren jeweiligen Ausgabemodulen anzeigen.

Weiter vorteilhaft kann beispielsweise eine sich über die Zeit ändernde Abfolge von optischen Mustern als Inspektionsmerkmal vorgesehen sein, welche über Zeitstempel und/oder auch Sequenznummern verfügen können, wobei die Inspektionsvorrichtung kontinuierlich diese Muster an das mindestens eine mobile Nutzerendgerät aussenden kann. Sowohl die Inspektionsvorrichtung als auch das mobile Nutzerendgerät können beispielsweise diese Muster zeitgleich an ihren jeweiligen Ausgabemodulen anzeigen.

Vorteilhaft kann das Kontrollverfahren auch so gestaltet sein, dass ein automatischer Timer (der Inspektionsvorrichtung) sequenziell unterschiedliche Inspektionsdatensätze aussendet und damit insbesondere das sequenzielle Ausgeben unterschiedlicher grafischer Sequenzen als Inspektions- bzw. Gültigkeitsmerkmale auslöst. Hierbei versteht es sich, dass vorzugsweise zu gleichen Zeiten gleiche Inspektionsmerkmale (auf gültig benutzten mobilen Nutzerendgeräten) und Gültigkeitsmerkmale (auf der mobilen Inspektionsvorrichtung) ausgegeben werden können.

Eine weitere vorteilhafte Variante des Kontrollverfahren kann vorsehen, dass der Kontrolleur durch eine Eingabe an der mobilen Inspektionsvorrichtung das Aussenden eines weiteren Inspektionsdatensatzes auslöst, was gemäß dem oben Beschriebenen die gültig benutzten Nutzerendgeräte veranlasst, nach dem Empfangen des weiteren Inspektionsdatensatzes ein weiteres Inspektionsmerkmal, insbesondere in Form einer weiteren grafischen Sequenz auszugeben (gemäß dem weiteren Inspektionsdatensatz), die sich in zumindest einem Merkmalsattribut von der jeweils vorherigen Sequenz unterscheidet. Gleichzeitig kann auch die mobile Inspektionsvorrichtung veranlasst werden, ein gleichartiges Gültigkeitsmerkmal, also ein zu dem ausgegebenen Merkmalsattribut korrespondierendes Gültigkeitsmerkmal, auszugeben. - Mit anderen Worten: der Kontrolleur kann bei dieser Ausführungsform "toggeln", welche Inspektionsmerkmale die mobilen Nutzerendgeräte ausgeben sollen, und die gültige benutzten Nutzerendgeräte werden diesem Kommando (in Echtzeit) folgen. Auch hierbei ist das Erkennen der gültig benutzten Nutzerendgeräte für den Kontrolleur einfach, und es ist für einen potenziellen Betrüger sinnlos, ein gültiges Inspektionsmerkmal kopieren zu wollen.

Das Aussenden des wenigstens einen Inspektionsdatensatzes kann dabei anmeldungsgemäß durch die Inspektionsvorrichtung des Kontrolleurs erfolgen oder, ausgelöst durch die Inspektionsvorrichtung, durch die Erfassungseinrichtung des zahlungspflichtigen Raums. Entscheidend kann jedenfalls sein, dass das Aussenden des wenigstens einen Inspektionsdatensatzes derart erfolgt, dass der wenigstens einen Inspektionsdatensatz für die zu kontrollierenden mobilen Nutzerendgeräte (zumindest diejenigen Nutzerendgeräte, die sich in der Nähe des Kontrolleurs befinden) empfangbar ist, damit die zu kontrollierenden Nutzerendgeräte die erwarteten Inspektionsmerkmale anzeigen können.

Wenn das Aussenden des wenigstens einen Inspektionsdatensatzes durch die Erfassungseinrichtung des zahlungspflichtigen Raums erfolgt, so kann der wenigstens eine Inspektionsdatensatz durch die Inspektionsvorrichtung des Kontrolleurs bestimmt werden. In diesem Fall kann die Inspektionsvorrichtung den wenigstens einen Inspektionsdatensatz z.B. drahtlos an die Erfassungseinrichtung senden, damit die Erfassungseinrichtung den Inspektionsdatensatz für die zu kontrollierenden mobilen Nutzerendgeräte empfangbar aussendet.

Wenn das Aussenden des wenigstens einen Inspektionsdatensatzes durch die Erfassungseinrichtung des zahlungspflichtigen Raums erfolgt, so kann alternativ der wenigstens eine Inspektionsdatensatz durch die Erfassungseinrichtung oder eine zur Erfassungseinrichtung gehörige Steuerungseinheit bestimmt werden. In diesem Fall muss sichergestellt sein, dass die Inspektionsvorrichtung den wenigsten einen Inspektionsdatensatz empfängt, damit sie das zugehörige Gültigkeitsmerkmal ausgeben kann.

Das anmeldungsgemäße Kontrollverfahren wird insbesondere während eines Inspektionsprozesses durchgeführt. Das Kontrollverfahren dient dazu, die Nutzerberechtigung eines Nutzers für die Inanspruchnahme einer bestimmten Dienstleistung zu überprüfen. Diese Überprüfung kann insbesondere während der Inanspruchnahme der Dienstleistung durchgeführt werden, aber auch (unmittelbar) vor der Inanspruchnahme oder (unmittelbar) nach einer Inanspruchnahme der Dienstleistung. Unter einer Dienstleistung ist vorliegend eine Transportdienstleistung oder die Teilnahme an einer Veranstaltung (z.B. Konzert, Theater, Sportveranstaltung etc.) zu verstehen.

Das Kontrollverfahren wird unter Nutzung einer mobilen Inspektionsvorrichtung durchgeführt. Die mobile Inspektionsvorrichtung kann zumindest ein Kommunikationsmodul umfassen, um insbesondere über einen drahtlosen Kommunikationskanal den mindestens einen Inspektionsdatensatz auszusenden. Ferner kann die Inspektionsvorrichtung mindestens ein Ausgabemodul umfassen, um die mindestens zwei unterschiedlichen Gültigkeitsmerkmale anzuzeigen. Ferner kann die mobile Inspektionsvorrichtung optional, für eine konventionelle Überprüfung, über ein Scanner-Modul verfügen, um Ticketdatensätze einzulesen und diese mit hinterlegten Referenzticketdatensätzen zu vergleichen.

Ein mobiles Nutzerendgerät umfasst zumindest ein Kommunikationsmodul, das zu dem Kommunikationsmodul der mobilen Inspektionsvorrichtung gleichartig ist bzw. kompatibel ist. Das Kommunikationsmodul des mobilen Nutzerendgeräts ist zumindest dazu eingerichtet, die durch die Inspektionsvorrichtung ausgesendeten Inspektionsdatensätze zu empfangen. Zudem kann ein mobiles Nutzerendgerät über Mittel zum Speichern einer Nutzerberechtigungsinformation und mindestens ein erstes Ausgabemodul verfügen. Das Ausgabemodul ist zumindest eingerichtet zum Ausgeben von Inspektionsmerkmalen.

Beispielhafte und nicht abschließende mobile Nutzerendgeräte sind Smartphones, Tablet-Computer, mobile Spielkonsolen, Laptops, Netbooks, Datenbrillen, Smart-Watches und ähnliche Wearables. Alternativ kann ein mobiles Nutzerendgerät ein dediziertes Ticketing-Gerät sein, dass ausschließlich für eine Ticketing-Anwendung ausgelegt ist.

Anmeldungsgemäß sendet die mobile Inspektionsvorrichtung oder die Erfassungseinrichtung des zahlungspflichtigen Raums während einer ersten Sendephase einen ersten Inspektionsdatensatz aus.

Ferner kann die mobile Inspektionsvorrichtung oder die Erfassungseinrichtung des zahlungspflichtigen Raums während einer zweiten Sendephase einen zweiten Inspektionsdatensatz aussenden, dessen Dateninhalt sich vom Dateninhalt des ersten Inspektionsdatensatzes zumindest teilweise unterscheidet.

Es versteht sich, dass sich an die zweite Sendephase mindestens eine weitere Sendephase anschließen kann, wobei während der mindestens einen weiteren Sendephase mindestens ein weiterer Inspektionsdatensatz ausgesendet wird. Der Dateninhalt des mindestens einen weiteren Inspektionsdatensatzes kann sich wenigstens vom Dateninhalt des zweiten Inspektionsdatensatzes, vorzugsweise von den Dateninhalten des ersten und zweiten Inspektionsdatensatzes, unterscheiden.

Ein Inspektionsdatensatz weist vorzugsweise mindestens eine durch das Nutzerendgerät ausführbare Inspektionsinstruktion auf, die bei einem Empfang durch das Nutzerendgerät ein Ausgeben, durch ein erstes Ausgabemodul, eines Inspektionsmerkmals bewirkt. Insbesondere kann durch Rechenmittel des Nutzerendgeräts die mindestens eine Inspektionsinstruktion derart ausgeführt werden, dass ein bestimmtes Inspektionsmerkmal ausgegeben wird.

Das Ausgeben eines Inspektionsmerkmals durch das erste Ausgabemodul hängt anmeldungsgemäß von dem jeweils empfangenen Inspektionsdatensatz und einer verfügbaren Nutzerberechtigungsinformation ab. Bei einer berechtigen Nutzung der Dienstleistung kann beispielsweise ein entsprechender Gültigkeitszustand in einem Speichermodul des mobilen Nutzerendgeräts als Nutzerberechtigungsinformation gespeichert sein, während bei einer nicht berechtigten Nutzung der Dienstleistung als Nutzerberechtigungsinformation ein entsprechender Gültigkeitszustand fehlen kann. Insbesondere werden bei einem ersten Inspektionsdatensatz abhängig von der verfügbaren Nutzerberechtigungsinformation (z.B. gültig, semi-gültig, ungültig) unterschiedliche Inspektionsmerkmale (z.B. gültig, semi-gültig, ungültig) ausgegeben.

Darüber hinaus ist anmeldungsgemäß vorgesehen, dass während der ersten Sendephase ein erstes Inspektionsmerkmal ausgegeben wird. Ferner kann während einer sich (vorzugsweise unmittelbar oder mittelbar, z.B. nach einer Pause) an die erste Sendephase anschließenden zweiten Sendephase ein zweites Inspektionsmerkmal ausgegeben werden. Das zweite (gültige) Inspektionsmerkmal unterscheidet sich vorzugsweise aufgrund der unterschiedlichen Inspektionsdatensätze von dem ersten (gültigen) Inspektionsmerkmal. So wird bei einem ersten Inspektionsdatensatz und einer bestimmten Nutzerberechtigungsinformation ein erstes Inspektionsmerkmal und bei einem zweiten Inspektionsdatensatz und der bestimmten Nutzerberechtigungsinformation ein zweites Inspektionsmerkmal ausgegeben, das sich von dem ersten Inspektionsmerkmal unterscheidet.

Ferner wird während der ersten Sendephase auf einem zweiten Ausgabemodul der mobilen Inspektionsvorrichtung ein erstes Gültigkeitsmerkmal ausgegeben. Ferner kann während der zweiten Sendephase ein zweites Gültigkeitsmerkmal ausgegeben werden. Während das erste Gültigkeitsmerkmal auf dem ersten Inspektionsdatensatz basiert, basiert das zweite Gültigkeitsmerkmal auf dem zweiten Inspektionsdatensatz. Das zweite Gültigkeitsmerkmal kann sich, insbesondere basierend auf den jeweils ausgesendeten Inspektionsdatensätzen, vom ersten Gültigkeitsmerkmal unterscheiden.

Dies erlaubt es dem Kontrolleur, in Echtzeit ein Inspektionsmerkmal, das auf einem bestimmten Inspektionsdatensatz basiert, mit einem Gültigkeitsmerkmal zu vergleichen, das auf dem gleichen Inspektionsdatensatz basiert. Das Inspektionsmerkmal wird dabei auf dem wenigstens einen zu kontrollierenden mobilen Nutzerendgerät ausgegeben; das Gültigkeitsmerkmal wird auf der mobilen Inspektionsvorrichtung ausgegeben. Basierend auf dem Vergleich kann zumindest auf eine berechtigte Nutzung oder nicht berechtigte Nutzung geschlossen werden.

Insbesondere erlaubt das anmeldungsgemäße Kontrollverfahren einem Kontrolleur, gültig betriebene mobile Nutzerendgeräte bzw. mobile Nutzermedien auf einfach wahrnehmbare Weise von ungültig betriebenen mobilen Nutzerendgeräten zu unterscheiden. Gleichzeitig ermöglicht das vorliegende Verfahren dem Kontrolleur, gefälschte Inspektionsmerkmale, die durch Kopieren und Weiterverbreiten auf ein mobiles Nutzerendgerät gelangt sind, auf einfache Weise von authentischen Inspektionsmerkmalen zu unterscheiden.

Grundsätzlich ist es möglich, dass jede Sendephase die gleiche (zeitliche) Länge besitzt (z.B. x Sekunden). In diesem Fall wird automatisch nach Ablauf diese Zeitdauer (z.B. 10 s, 20 s etc.) ein geänderter Inspektionsdatensatz ausgesendet. Hierdurch kann sichergestellt werden, dass sich die ausgegebenen Inspektionsmerkmale (sowie die entsprechenden Gültigkeitsmerkmale) während eines Inspektionsprozesses zeitlich ändern.

Gemäß einer bevorzugten Ausführungsform des anmeldungsgemäßen Kontrollverfahrens kann die zeitliche Länge einer Sendephase variiert werden. Insbesondere kann die zeitliche Länge einer Sendephase durch einen Zufallsgenerator, beispielsweise der Inspektionsvorrichtung, gesteuert werden. Beispielsweise kann der Zufallsgenerator die zeitliche Länge jeder Sendephase zwischen einer minimalen Zeitdauer und einer maximalen Zeitdauer zufällig festlegen. Aufgrund der nicht vorhersehbaren Änderung eines ausgegebenen Inspektionsmerkmals durch die zufällig variierenden Sendephasenlängen kann eine Manipulation noch weiter erschwert werden.

Alternativ oder zusätzlich kann die zeitliche Länge einer Sendephase (und damit z.B. die Änderungsgeschwindigkeit der Inspektionsmerkmale) in Reaktion auf eine detektierte Betätigung mindestens eines Nutzereingabemoduls der mobilen Inspektionsvorrichtung gesteuert werden. Beispielsweise kann die mobile Inspektionsvorrichtung über mindestens ein Nutzereingabemodul bzw. eine Nutzerschnittstelle verfügen, die es einem Kontrolleur ermöglicht, die zeitliche Länge einer Sendephase zu beeinflussen (z.B. verlängern oder verkürzen). Das Nutzereingabemodul kann beispielswiese mindestens eine Taste, ein Softkey, ein Touchdisplay, ein Spracherfassungsmittel oder dergleichen umfassen/sein. Dies ermöglicht es einem Kontrolleur, die Änderung der durch die zu kontrollierenden mobilen Nutzerendgeräte ausgegebenen Inspektionsmerkmale in einer bestimmten Weise während des Inspektionsprozesses zu steuern. Der Kontrolleur kann also durch verschiedene Gültigkeitsmerkmale "toggeln", und die von den zu kontrollierenden mobilen Nutzerendgeräten ausgegebenen Inspektionsmerkmale müssen diesen Änderungen folgen, um als "gültig" erkannt zu werden.

Gemäß einer weiteren Ausführungsform des anmeldungsgemäßen Kontrollverfahrens kann ein durch das erste Ausgabemodel ausgegebenes (gültiges) Inspektionsmerkmal bei einer verfügbaren gültigen Nutzerberechtigungsinformation zu dem durch das zweite Ausgabemodul ausgegebenen Gültigkeitsmerkmal gleichartig sein (d.h. im Wesentlichen identisch sein). Beispielsweise kann in diesem Fall das ausgegebene Inspektionsmerkmal (im Wesentlichen) identisch sein zu dem während der gleichen Sendephase ausgegebenen Gültigkeitsmerkmal. Bei einem grafischen Inspektionsmerkmal kann das angezeigte Gültigkeitsmerkmal (im Wesentlichen) identisch zu dem grafischen Inspektionsmerkmal sein; bei einem grafischen Inspektionsmerkmal ist das Ausgabemodul also ein Anzeigemodul, beispielweise ein Bildschirm oder eine LCD-Anzeige. Es versteht sich hierbei, dass es aufgrund der Nutzung von unterschiedlichen Anzeigemodulen (z.B. unterschiedlicher Form, Größe, Auflösung etc.) zu Abweichungen kommen kann, ohne dass hierdurch die wesentliche Identität der dargestellten Merkmale in Frage gestellt wird.

Anmeldungsgemäß kann jedoch auch eine Gleichartigkeit bei unterschiedlichen Darstellungsweisen vorliegen. Beispielsweise kann als Inspektionsmerkmal in grafischer Form ein "rotes Dreieck" auf einem ersten Anzeigemodul dargestellt werden. Eine anmeldungsgemäße Gleichartigkeit mit einem Gültigkeitsmerkmal ist insbesondere dann gegeben, wenn ein zweites Ausgabemodul ebenfalls in grafischer Form ein "rotes Dreieck" darstellt, in Textform "rotes Dreieck" anzeigt oder in akustischer Form, z.B. über einen Lautsprecher bzw. Kopfhörer, "rotes Dreieck" ausgibt.

Alternativ oder zusätzlich kann ein durch das erste Ausgabemodul ausgegebenes (ungültiges) Inspektionsmerkmal bei einer verfügbaren ungültigen Nutzerberechtigungsinformation von dem durch das zweite Ausgabemodul ausgegebenen Gültigkeitsmerkmal in mindestens einem ersten Merkmalsattribut abweichen. Insbesondere kann vorgegeben sein, dass bei Detektion einer ungültigen Nutzerberechtigungsinformation - wenn beispielsweise aufgrund einer fehlenden Anmeldung des mobilen Nutzerendgeräts an dem Hintergrundsystem kein Gültigkeitszustand (z.B. Quittungsnachricht) in dem mobilen Nutzerendgerät gespeichert ist - ein ungültiges Inspektionsmerkmal ausgegeben wird, dass sich in mindestens einem bestimmten ersten Merkmalsattribut von einem gültigen Inspektionsmerkmal unterscheidet. Insbesondere liegt keine Gleichartigkeit zu einem Gültigkeitsmerkmal vor. Eine Abweichung kann von einem Kontrolleur unmittelbar wahrgenommen werden.

Es versteht sich, dass sich die Abweichung auch in zwei oder mehr ersten Merkmalsattributen zeigen kann. Ausgehend von dem obigen Beispiel kann zum Beispiel anstelle eines roten Dreiecks ein Dreieck anderer Farbe und/oder ein Objekt anderer Form als (ungültiges) Inspektionsmerkmal angezeigt werden. Für den Kontrolleur ist aufgrund der Abweichung in mindestens einem bestimmten ersten Merkmalsattribut direkt ersichtlich, dass der Nutzer des entsprechenden mobilen Nutzerendgeräts keine Berechtigung zur Nutzung der Dienstleistung besitzt.

Darüber hinaus kann alternativ oder zusätzlich ein durch das erste Ausgabemodul ausgegebenes (semi-gültiges) Inspektionsmerkmal bei einer verfügbaren semigültigen Nutzerberechtigungsinformation von dem durch das zweite Ausgabemodul ausgegebenen Gültigkeitsmerkmal in mindestens einem zweiten Merkmalsattribut abweichen. Es ist erkannt worden, dass es beispielsweise bei einem Raumerfassungssystem zu dem Problem kommen kann, dass eine Anmeldung an dem Hintergrundsystem fehlgeschlagen ist, beispielsweise aufgrund eines (augenblicklich) fehlenden Kommunikationsnetzes zwischen dem mobilen Nutzerendgerät und dem Hintergrundsystem. Jedoch kann in dem mobilen Nutzerendgerät gespeichert werden, dass ein oder mehrere Anmeldeversuch/e unternommen wurde/n. In diesem Fall kann vorzugsweise ein semi-gültiger Zustand als Nutzerberechtigungsinformation in dem mobilen Nutzerendgerät gespeichert sein. Um diesen Gültigkeitszustand von den zuvor beschriebenen Zuständen zu unterscheiden, kann ein semi-gültiges Inspektionsmerkmal ausgegeben werden, das sich in mindestens einem bestimmten zweiten Merkmalsattribut von einem gültigen Inspektionsmerkmal (und von einem ungültigen Inspektionsmerkmal) unterscheidet (das sich insbesondere von dem ersten Merkmalsattribut unterscheidet). Insbesondere liegt keine Gleichartigkeit zu dem Gültigkeitsmerkmal vor.

Es versteht sich, dass sich die Abweichung auch in zwei oder mehr zweiten Merkmalsattributen zeigen kann. Ausgehend von dem obigen Beispiel kann zum Beispiel anstelle eines roten Dreiecks (gültiger Zustand) oder ein Dreieck anderer Farbe (ungültiger Zustand) ein rotes und blickendes Dreieck oder ein zusätzliches Objekt (z.B. Textfeld mit "nähere Kontrolle erforderlich") als Inspektionsmerkmal angezeigt werden. Für den Kontrolleur ist aufgrund der Abweichung in mindestens einem bestimmten zweiten Merkmalsattribut direkt ersichtlich, dass der Nutzer des entsprechenden mobilen Nutzerendgerät über eine "Semi-Berechtigung" zur Nutzung einer Dienstleistung besitzt.

Anders ausgedrückt, werden in Abhängigkeit von der verfügbaren Nutzerberechtigungsinformation (z.B. gültig, semi-gültig, ungültig) unterschiedliche erste Inspektionsmerkmale (z.B. gültig, semi-gültig, ungültig) auf einem zu kontrollierenden mobilen Nutzerendgerät sowie unterschiedliche zweite Inspektionsmerkmale (z.B. gültig, semi-gültig, ungültig) auf einer mobilen Inspektionsvorrichtung ausgegeben. Durch einen Vergleich mit dem ersten Gültigkeitsmerkmal bzw. dem zweiten Gültigkeitsmerkmal kann in einfacher Weise die Berechtigung eines Nutzers überprüft werden.

Gemäß einer bevorzugten Ausführungsform des Kontrollverfahrens kann ein Inspektionsmerkmal ein grafisches Inspektionsmerkmal in Form einer grafischen (Film-)Sequenz und/oder ein akustisches Inspektionsmerkmal in Form einer akustischen Sequenz (Tonfolge) sein. Eine grafische und/oder akustische Sequenz ist/sind leicht durch einen Kontrolleur kontrollierbar und insbesondere - beispielsweise im Vergleich zu einem statischen Bild - schwerer zu kopieren. Da bei einem Inspektionsverfahren erwartet werden kann, dass der weitaus größte Anteil zu kontrollierender mobiler Nutzerendgeräte "gültig" vorgefunden wird, kann es weiter bevorzugt sein, dass das Ausgeben von akustischen Inspektionsmerkmalen beschränkt wird auf solche Nutzerendgeräte, die "ungültig" oder "semi-gültig" benutzt werden.

Auch kann ein Gültigkeitsmerkmal ein grafisches Gültigkeitsmerkmal in Form einer grafischen (Film-)Sequenz und/oder ein akustisches Gültigkeitsmerkmal in Form einer akustischen Sequenz sein. Insbesondere kann als Gültigkeitsmerkmal eine rein grafische Bildsequenz durch ein Display der mobilen Inspektionsvorrichtung angezeigt werden. Da das Gültigkeitsmerkmal das Referenzmerkmal ist, das von der Inspektionsvorrichtung ausgegeben wird, wird das Gültigkeitsmerkmal bevorzugt ausschließlich grafisch (nicht akustisch) ausgegeben.

Vorzugsweise kann es sich bei dem jeweils ausgegebenen Gültigkeitsmerkmal um ein Merkmal handeln, das zu dem jeweils ausgegebenen gültigen Inspektionsmerkmal gleichartig ist, insbesondere identisch ist.

Wie bereits beschrieben wurde, kann ein Inspektionsmerkmal und/oder ein Gültigkeitsmerkmal vorzugsweise eine grafische Sequenz und/oder eine akustische Sequenz sein.

Gemäß einer Ausführungsform des anmeldungsgemäßen Kontrollverfahrens kann die grafische und/oder akustische Sequenz eine Videosequenz sein, bevorzugt eine Videosequenz aus einer Vielzahl von Videosequenzen, die in den zu kontrollierenden mobilen Nutzerendgeräten in eindeutig identifizierbarer Weise gespeichert sind. Empfängt nun bei einem anmeldungsgemäßen Inspektionsverfahren eine Vielzahl von mobilen Nutzerendgeräten mit gültigen Nutzerberechtigungsinformationen gleichzeitig jeweils einen identischen ersten Inspektionsdatensatz, so kann auf diesen Geräten eine jeweils gleiche erste Videosequenz als gültiges Inspektionsmerkmal wiedergegeben werden. Dabei kann der erste Inspektionsdatensatz die erste Videosequenz identifizieren. Empfangen dieselben mobilen Nutzerendgeräte während derselben Inspektion einen zweiten Inspektionsdatensatz, so kann auf diesen Geräten jeweils die Wiedergabe der ersten Videosequenz gestoppt und die Wiedergabe einer zweiten Videosequenz gestartet werden. Dabei kann der zweite Inspektionsdatensatz die zweite Videosequenz identifizieren. Dieser Ablauf wird insbesondere gesteuert von einer auf den mobilen Nutzerendgeräten installierten Dienstleistungsnutzungsanwendung.

Gemäß einer weiteren Ausführungsform des anmeldungsgemäßen Kontrollverfahrens kann die grafische und/oder akustische Sequenz aus einer Mehrzahl von Merkmalsattributen gebildet werden. Insbesondere eine Dienstleistungsnutzungsanwendung der mobilen Nutzerendgeräte kann die grafische und / oder akustische Sequenz aus der Mehrzahl von Merkmalsattributen bestimmen. Der Vorteil dieser Ausführungsform liegt darin, dass insbesondere geringerer Speicherplatz auf den mobilen Nutzerendgeräten benötigt wird, als zum Abspeichern fertiger Videosequenzen. Die Dienstleistungsnutzungsanwendung kann aus Merkmalsattribute, die in dem Inspektionsdatensatz enthalten sind, in Echtzeit die grafische und / oder akustische Sequenz bestimmen, die, vergleichbar eine Vektorgrafik, aus gespeicherten grafischen und / oder akustischen Elementen berechnet werden kann.

Die Mehrzahl von Merkmalsattributen kann in eine Mehrzahl von Klassen eingestuft werden. Die Mehrzahl von Klassen kann insbesondere zumindest zwei der folgenden Klassen umfassen:
- Form mindestens eines anzuzeigenden Objekts,
- Größe des mindestens einen anzuzeigenden Objekts,
- Farbe des mindestens einen anzuzeigenden Objekts,
- Bewegungsmuster des mindestens einen anzuzeigenden Objekts,
- Bewegungsgeschwindigkeit des mindestens einen anzuzeigenden Objekts,
- Hintergrundfarbe,
- Textfeld
- Ton oder Tonfolge.

Die nachfolgende Tabelle 1 zeigt beispielhafte und insbesondere nicht abschließende Merkmalsattribute, die in beispielhaften und nicht abschließenden unterschiedlichen Klassen eingestuft sind.

**Tabelle 1**

| **Klasse** | **Merkmalsattribut** |
|---|---|
| Form | Linie, Dreieck, Quadrat, Kreis etc. |
| Größe | groß, mittel, klein etc. |
| Farbe | rot, grün, blau, gelb, weiß, schwarz etc. |
| Bewegungsmuster | vom linken Displayrand zum rechten Displayrand, vom rechten Displayrand zum linken Displayrand, vom oberen Displayrand zum unteren Displayrand, von der links-oberen Displayecke zur rechts-unteren Displayecke etc. |
| Bewegungsgeschwindigkeit | schnell, langsam etc. |
| Hintergrundfarbe | rot, grün, blau, gelb, weiß, schwarz etc. |
| Textfeld | "Kontrolle", aktuelles Datum, aktuelle Uhrzeit, eine bestimmte Zeichenfolge (z.B. "1, 2, 3") etc. |
| Ton | kein Ton, Klingelton#1, Klingelton#2 etc. |

Eine grafische und/oder akustische Sequenz kann beispielsweise aus zwei oder mehr Merkmalsattributen (unterschiedlicher Klassen) gebildet sein. Beispielsweise kann als Sequenz ein kleines rotes Dreieck, das sich vom linken Displayrand zum rechten Displayrand bewegt, angezeigt werden. In diesem Beispiel ist die Sequenz aus folgenden Merkmalsattributen gebildet:

| | |
|---|---|
| Farbe: | rot |
| Form: | Dreieck |
| Größe: | klein |
| Bewegungsmuster: | vom linken Displayrand zum rechten Displayrand |

Es versteht sich, dass die Sequenz weitere Merkmalsattribute, wie ein weiteres Objekt mit einer weiteren Form, eine bestimmte Hintergrundfarbe etc., umfassen kann.

Wie bereits beschrieben wurde, basiert ein während einer bestimmten Sendephase angezeigtes Inspektionsmerkmal (und ein angezeigtes Gültigkeitsmerkmal) insbesondere auf dem während dieser bestimmten Sendephase von der Inspektionsvorrichtung ausgesendeten Inspektionsdatensatz. In einer Ausführungsform kann ein ausgesendeter Inspektionsdatensatz eine im mobilen Nutzerendgerät gespeicherte, auszugebende Videosequenz identifizieren; in einer Ausführungsform kann ein ausgesendeter Inspektionsdatensatz die jeweiligen Merkmalsattribute einer auszugebenden grafischen oder akustischen Sequenz enthalten, welche die Dienstleistungsnutzungsanwendung aus den Merkmalsattributen in Echtzeit zusammenstellt und abspielt.

Gemäß einer besonders bevorzugten Ausführungsform des anmeldungsgemäßen Kontrollverfahrens kann ein Inspektionsdatensatz eine Mehrzahl von Inspektionsinstruktionen umfassen. In dem mobilen Nutzerendgerät kann eine Mehrzahl von (zuvor beschriebenen) Merkmalsattributen gespeichert sein. Vorzugsweise jedem gespeicherten Merkmalsattribut kann eine Inspektionsinstruktion (in eindeutiger Weise) zugeordnet sein. Die grafische Sequenz und/oder akustische Sequenz kann basierend auf den Inspektionsinstruktionen eines empfangenen Inspektionsdatensatzes gebildet und insbesondere von einem ersten Ausgabemodul ausgegeben werden. Eine Inspektionsinstruktion kann insbesondere ein bestimmter Code, vorzugsweise eine Zahl (beispielsweise eine Hexadezimalzahl sein).

In jedem (registrierten) mobilen Nutzerendgerät können sämtliche Merkmalsattribute gespeichert sein, aus denen ein Inspektionsmerkmal gebildet werden kann. Entsprechendes kann für die mobile Inspektionsvorrichtung gelten. Jedem gespeicherten Merkmalsattribut kann in eindeutiger Weise genau eine Inspektionsinstruktion zugeordnet sein. Beispielsweise kann mindestens eine entsprechende Zuordnungstabelle (z.B. eine Lookup-Tabelle bzw. Umsetzungstabelle) in dem mobilen Nutzerendgerät gespeichert sein. Beispielhaft ist eine Zuordnungstabelle (siehe Tabelle 2) nachfolgend dargestellt.

**Tabelle 2**

| **Inspektionsinstruktion** | **Merkmalsattribut** |
|---|---|
| 0001 | Dreieck |
| 0010 | Rechteck |
| 0011 | rot (Farbe des Objekts) |
| 0100 | vom linken Displayrand zum rechten Displayrand |
| 0101 | schnell |
| 0110 | Rot (Hintergrundfarbe) |
| 0111 | "Kontrolle" (Textfeld) |
| 1000 | kein Ton |
| etc. | etc. |

Als Inspektionsdatensatz kann insbesondere ein Datensatz mit z.B. zwei oder mehr Inspektionsinstruktion (z.B. {0001, 0011, 0111}), also ein N-Tupel, ausgesendet werden. Das mobile Nutzerendgerät (und die mobile Inspektionsvorrichtung) bzw. die auf dem mobilen Nutzerendgerät installierte Dienstleistungsnutzungsanwendung kann bei einem Empfang eines entsprechenden Inspektionsdatensatzes mittels der darin enthaltenen Inspektionsinstruktionen und beispielsweise der gespeicherten Zuordnungstabelle (und den gespeichertes Objekten) eine grafische und/oder akustische Sequenz, insbesondere in Echtzeit, bilden bzw. generieren.

Die so gebildete Sequenz kann so lange von dem ersten Ausgabemodul ausgegeben werden, bis beispielsweise in einer anschließenden Sendephase ein weiterer Inspektionsdatensatz mit mindestens einer anderen Inspektionsinstruktion empfangen wird. Die Aussendung von Inspektionsinstruktionen hat gegenüber der Aussendung von Merkmalsattributen den Vorteil, dass die zu übertragende Datenmenge signifikant reduziert werden kann. Dies kann wiederum dazu führen, dass zwischen dem Start einer Aussendung eines Inspektionsdatensatzes und einer Ausgabe des entsprechenden Inspektionsmerkmals (nahezu) keine Verzögerungszeit vorhanden ist. Anders ausgedrückt, nach einer Aussendung eines Inspektionsdatensatzes kann ein entsprechendes Inspektionsmerkmals unmittelbar und insbesondere (nahezu) in Echtzeit ausgegeben werden.

Vorzugsweise können die Merkmalsattribute und die jeweils (eindeutig) zugeordneten Inspektionsinstruktionen während eines Registrierungsprozesses auf dem mobilen Nutzerendgerät gespeichert werden. Während des Registrierungsprozesses an einem Hintergrundsystem (wie oben beschrieben wurde) können diese Daten beispielsweise von dem Hintergrundsystem auf das mobile Nutzerendgerät geladen werden.

Alternativ oder zusätzlich können die Merkmalsattribute und die jeweils (eindeutig) zugeordneten Inspektionsinstruktionen während einer Installierung einer Dienstleistungsnutzungsanwendung auf dem mobilen Nutzerendgerät gespeichert werden. Auch kann vorgesehen sein, dass die Merkmalsattribute während einer Anmeldung an dem Hintergrundsystem für eine Inanspruchnahme einer bestimmten Dienstleistung auf dem mobilen Nutzerendgerät heruntergeladen und gespeichert werden.

Um einem Betrug noch weiter vorzubeugen, wird gemäß einer weiteren Ausführungsform vorgeschlagen, dass die gespeicherten Merkmalsattribute und die jeweils (eindeutig) zugeordneten Inspektionsinstruktionen zu bestimmten Zeitpunkten, insbesondere regelmäßig (z.B. einmal im Monat oder in der Woche etc.), während eines mit einem Hintergrundsystem durchzuführenden Aktualisierungsprozesses einer Dienstleistungsnutzungsanwendung auf dem mobilen Nutzerendgerät aktualisiert werden. Bei einer Aktualisierung können insbesondere geänderte Merkmalsattribute, geänderte Inspektionsinstruktionen und/oder geänderte Zuordnungen gespeichert werden. Hierbei kann vorgesehen sein, dass ohne die Durchführungen einer derartigen Aktualisierung eine berechtigte Nutzung einer Dienstleistung nicht mehr möglich ist.

Vorzugsweise kann das Speichern von Merkmalsattributen und den jeweils (eindeutig) zugeordneten Inspektionsinstruktionen das Herunterladen einer oder mehreren Zuordnungstabelle/n umfassen.

In der oben beschriebenen Ausführungsform, bei der die grafische und/oder akustische Sequenz eine Videosequenz aus einer Vielzahl von Videosequenzen ist, die die in den zu kontrollierenden mobilen Nutzerendgeräten in eindeutig identifizierbarer Weise gespeichert sind, können die Videosequenzen während des Registrierungsprozesses auf dem mobilen Nutzerendgerät gespeichert werden. Während des Registrierungsprozesses an einem Hintergrundsystem (wie oben beschrieben wurde) können diese Daten beispielsweise von dem Hintergrundsystem auf das mobile Nutzerendgerät geladen werden. Auch kann vorgesehen sein, dass die Videosequenzen während einer Anmeldung an dem Hintergrundsystem für eine Inanspruchnahme einer bestimmten Dienstleistung auf dem mobilen Nutzerendgerät heruntergeladen und gespeichert werden.

In einer weiteren Ausführungsform kann vorgesehen sein, dass die gespeicherten Videosequenzen zu bestimmten Zeitpunkten, insbesondere regelmäßig (z.B. einmal im Monat oder in der Woche etc.), während eines mit einem Hintergrundsystem durchzuführenden Aktualisierungsprozesses einer Dienstleistungsnutzungsanwendung auf dem mobilen Nutzerendgerät aktualisiert werden. Bei einer Aktualisierung können insbesondere geänderte Videosequenzen und/oder geänderte Zuordnungen gespeichert werden. Auch hierbei kann vorgesehen sein, dass ohne die Durchführungen einer derartigen Aktualisierung eine berechtigte Nutzung einer Dienstleistung nicht mehr möglich ist.

Gemäß einer weiteren Ausführungsform des Kontrollverfahrens kann die Zuordnung einer Inspektionsinstruktion zu einem Merkmalsattribut von einem Gültigkeitszustand der Nutzerberechtigungsinformation abhängen. Beispielsweise können zumindest zwei, vorzugsweise drei zuvor beschriebene Zuordnungstabellen vorgesehen sein. Eine erste Zuordnungstabelle kann angewandt werden bei einer verfügbaren gültigen Nutzerberechtigungsinformation, eine zweite Zuordnungstabelle bei einer verfügbaren ungültigen Nutzerberechtigungsinformation und eine dritte Zuordnungstabelle bei einer verfügbaren semi-gültigen Nutzerberechtigungsinformation. In jeder der Zuordnungstabellen kann eine eindeutige Zuordnung zwischen der mindestens einen Inspektionsinstruktion und dem mindestens einen Merkmalsattribut gespeichert sein. Basierend auf der verfügbaren Nutzerberechtigungsinformation kann, z.B. durch die Dienstleistungsnutzungsanwendung, die entsprechende Zuordnungstabelle bestimmt und abhängig von dieser Zuordnungstabelle sowie der erhaltenen Inspektionsinstruktionen das Inspektionsmerkmal in Form einer zuvor beschriebenen Sequenz generiert werden. In einfacher Weise werden abhängig von der verfügbaren Nutzerberechtigungsinformation unterschiedliche Sequenzen durch ein erstes Ausgabemodul ausgegeben.

Die in jeweils einem Inspektionsdatensatz enthaltenen Inspektionsinstruktionen können vorab festgelegt sein. Gemäß einer bevorzugten Ausführungsform können die jeweils in einem Inspektionsdatensatz enthaltenen Inspektionsinstruktionen durch einen in der mobilen Inspektionsvorrichtung angeordneten Zufallsgenerator und/oder in Reaktion auf eine detektierte Betätigung mindestens eines Nutzereingabemoduls der mobilen Inspektionsvorrichtung gesteuert werden. Beispielsweise kann ein Zufallsgenerator innerhalb vorgegebener Rahmenbedingungen (beispielsweise vorgegebene Klassen, minimale und maximale Anzahl von Merkmalsattributen) die jeweiligen Inspektionsdatensätze bzw. deren Inspektionsinstruktionen bestimmen.

Auch können die in den jeweiligen Inspektionsdatensätzen enthaltenen Inspektionsinstruktionen zumindest teilweise durch Nutzung eines (zuvor beschriebenen) Nutzereingabemoduls beeinflusst werden. Beispielsweise kann hierüber zumindest eine Klasse von Merkmalsattributen (z.B. Bewegungsgeschwindigkeit oder Textfeld) in einem Inspektionsdatensatz beeinflusst werden. Es versteht sich, dass mit einer Änderung eines Merkmalsattributs durch einen Kontrolleur gleichzeitig eine Änderung der Sendephasenlängen gesteuert werden kann. Wenn beispielsweise der Kontrolleur als Merkmalsattribut die Bewegungsgeschwindigkeit über das Nutzereingabemodul ändert, kann ein entsprechender Inspektionsdatensatz erzeugt und unmittelbar (oder nach einer bestimmten Zeitdauer) ausgesendet werden. Die unmittelbare Aussendung umfasst in diesem Fall auch die Steuerung der Länge der vorherigen Sendephase.

Indem das Verfahren eine Möglichkeit bereitstellt, die es dem Kontrolleur ermöglicht, die auszugebenden (gültigen) Inspektionsmerkmale (und Gültigkeitsmerkmale) in (nahezu) Echtzeit zu beeinflussen, kann der Schutz vor einem Betrug noch weiter verbessert werden. Ein kopiertes Inspektionsmerkmal kann in einfacher Weise detektiert werden.

Um zu verhindern, dass sich ein Nutzer einer Dienstleistung während eines Inspektionsprozesses bei einem Hintergrundsystem anmeldet oder ein gültiges elektronisches Ticket erwirbt, können gemäß einer Ausführungsform des Kontrollverfahrens vorzugsweise zu Beginn eines Inspektionsprozesses entsprechende Handlungen gesperrt bzw. blockiert werden. Insbesondere kann während einer Kontrollstartphase noch vor der ersten Sendephase ein Kontrolldatensatz ausgesendet werden, der eingerichtet ist, von den im zahlungspflichtigen Raum befindlichen mobilen Endgeräten empfangen zu werden. Bei einem Empfang des Kontrolldatensatzes durch das mobile Nutzerendgerät kann das mobile Nutzerendgerät (bzw. die Dienstleistungsnutzungsanwendung), beispielsweise während des gesamten Kontrollzeitraums, in einen Kontrollmodus gesetzt werden.

Vorzugsweise kann die Aussendung des Kontrolldatensatzes zumindest durch die mobile Inspektionsvorrichtung bewirkt werden. Beispielsweise kann die mobile Inspektionsvorrichtung den Kontrolldatensatz aussenden oder die Aussendung durch einen weiteren Sender bewirken. Der mindestens eine weitere Sender kann beispielsweise mindestens eine in einer Transportvorrichtung angeordnete Erfassungseinrichtung sein, die beispielsweise in einem normalen Betriebsmodus zum Austauschen von Anwesenheitsnachrichten eingesetzt wird. Der ausgesendete Kontrolldatensatz umfasst insbesondere Instruktionen, die bewirken, dass das mobile Nutzerendgerät, insbesondere die Dienstleistungsnutzungsanwendung, in den Kontrollmodus gesetzt wird. Das Nutzerendgerät kann in diesem Kontrollmodus zumindest so lange verbleiben, wie der Kontrolldatensatz empfangen wird. Dabei kann die Aussendung des Kontrolldatensatzes periodisch wiederholt werden, so dass die mobilen Nutzerendgeräte im Kontrollmodus verbleiben, solange in bestimmten Zeitintervallen erneute Kontrolldatensätze empfangen werden.

In diesem Kontrollmodus kann zumindest eine Anmeldung oder der Erwerb eines Tickets oder die Entwertung eines Tickets blockiert sein. Beispielsweise kann in dem Kontrollmodus zumindest eine Änderung der in dem mobilen Nutzerendgerät verfügbaren Nutzerberechtigungsinformation blockiert werden. Hierunter ist insbesondere auch zu verstehen, dass bei einer Nutzerberechtigungsinformation in Form eines elektronischen Tickets eine Entwertung nicht mehr möglich ist, ebenso kann eine Anmeldung des mobilen Nutzerendgeräts am Hintergrundsystem gesperrt oder blockiert werden.

Die Erfassungseinrichtung, die vor allem im normalen Betriebsmodus zum Austauschen von Anwesenheitsnachrichten eingesetzt wird, kann eingerichtet sein, mittels wenigstens einer Antenne im zahlungspflichtigen Raum ein Sendefeld aufzubauen, das von allen anwesenden mobilen Nutzerendgeräten empfangen werden kann. Ebenso kann die Erfassungseinrichtung in der Lage sein, von mobilen Nutzerendgeräten Anwesenheitsnachrichten mittels der mindestens einen Antenne zu empfangen. Der drahtlose Datenaustausch zwischen Erfassungseinrichtung und mobilen Nutzerendgeräten kann dabei auf dem Bluetooth-, Bluetooth-Low-Energy (BLE)- oder WLAN-Standard basieren; insbesondere können sogenannte BLE-Beacons und deren Antennen und Protokolle zum Einsatz kommen.

Insbesondere nach Beendigung des Inspektionsprozesses kann das mobile Nutzerendgerät bzw. die Dienstleistungsnutzungsanwendung wieder in den normalen Betriebsmodus gesetzt werden. Beispielsweise kann dies durch Aussenden eines entsprechenden Datensatzes erfolgen oder durch Beendigung des (periodischen) Aussendens des Kontrolldatensatzes. Eine Aussendung eines entsprechenden Datensatzes zur Aufhebung des Kotrollmodus oder die Beendigung des Aussendens des Kontrolldatensatzes kann durch die mobile Inspektionsvorrichtung und/oder automatisch an der nächsten Haltestation oder bei Detektion einer Öffnung einer Fahrzeugtür bewirkt werden. Zudem kann eine bestimmte Zeitdauer für eine Sperrung vorgegeben sein, nach deren Ablauf das mobile Nutzerendgerät, insbesondere die Dienstleistungsnutzungsanwendung, automatisch wieder in den normalen Betriebsmodus gesetzt werden kann.

Die zuvor beschriebenen Ausführungsformen können insbesondere bei einem zuvor beschriebenen Raumerfassungssystem zur Anwendungen kommen. Bei einem Raumerfassungssystem ist insbesondere wesentlich, dass das mobile Nutzerendgerät (bzw. der das mobile Nutzerendgerät betreibende Nutzer) es für eine berechtigte Nutzung eines Raumerfassungssystems zulässt, dass die Anwesenheit des mobilen Nutzerendgeräts in dem zahlungspflichtigen Raum (z.B. Transportvorrichtung, Veranstaltungsbereich etc.) tatsächlich von Beginn bis zum Ende der Nutzung der Dienstleistung, also von einem Eintritt in den Raum bis zu einem Austritt aus dem Raum, erfasst und aufgezeichnet wird. Dies kann beispielsweise durch Anwendung des BIBO-Verfahrens, CIBO-Verfahrens oder CICO-Verfahrens erreicht werden.

Vorzugsweise kann sich bei Beginn der Nutzung der Dienstleistung das mobile Nutzerendgerät bzw. die darauf installierte Dienstleistungsnutzungsanwendung an dem Hintergrundsystem mit einem der obigen Verfahren anmelden. In dem Anmeldeprozess können Anmeldedaten an das Hintergrundsystem gesendet werden, die dazu geeignet sind, dass das Hintergrundsystem die Anmeldung einem zuvor registrierten Nutzer (bzw. dem Nutzerkonto des Nutzers) der Dienstleistungsnutzungsanwendung zuordnet. Anders ausgedrückt, kann sichergestellt sein, dass das verwendete mobile Nutzerendgerät mit einer installierten Dienstleistungsnutzungsanwendung genau einem Nutzer zugeordnet werden kann.

Während des Anmeldeprozesses kann in dem mobilen Nutzerendgerät, insbesondere der Dienstleistungsnutzungsanwendung, als Nutzerberechtigungsinformation ein Dateneintrag gespeichert werden, der insbesondere einen Zeitstempel enthält (Datum und Uhrzeit der Anmeldung).

Wenn die Anmeldung erfolgreich ist, d.h. wenn die Anmeldedaten tatsächlich vom Hintergrundsystem empfangen und als authentisch geprüft werden, kann das Hintergrundsystem eine Quittungsnachricht an das erfolgreich angemeldete mobile Nutzerendgerät senden. Der Inhalt der Quittungsnachricht kann als (gültige) Nutzerberechtigungsinformation in dem mobilen Nutzerendgerät, insbesondere der Dienstleistungsnutzungsanwendung, gespeichert werden. Die Quittungsnachricht enthält insbesondere ebenfalls einen Zeitstempel und eine Bestätigung der erfolgreichen Anmeldung.

Bei einem Ticket-basierten System kann in dem mobilen Nutzerendgerät als Nutzerberechtigungsinformation ein elektronisches Ticket für die genutzte Dienstleistung verfügbar sein. Um zu überprüfen, ob es sich bei dem gespeicherten elektronischen Ticket um ein gültiges Ticket handelt, d.h. eine gültige Nutzerberechtigungsinformation vorliegt, kann, gemäß einer weiteren Ausführungsform des anmeldungsgemäßen Kontrollverfahrens, durch die mobile Inspektionsvorrichtung mindestens ein Referenzticketdatensatz zusammen mit einem Inspektionsdatensatz ausgesendet werden. Ein gemeinsamen Aussenden von Ticket- und Inspektionsdatensatz umfasst auch, dass die Ticketdaten in dem Inspektionsdatensatz enthalten sein können (oder umgekehrt).

Das Ausgeben, durch das erste Ausgabemodul, eines Inspektionsmerkmals kann ferner auf dem empfangenen Referenzticketdatensatz basieren. Ein Referenzticketdatensatz umfasst insbesondere gültige Ticketdaten, die definieren, welche auf den mobilen Nutzerendgeräten gespeicherten elektronischen Tickets tatsächlich gültig für die in dem Kontrollprozess kontrollierte Dienstleistung sind. Nur dann, wenn in dem mobilen Nutzerendgerät, insbesondere der Dienstleistungsnutzungsanwendung, wenigstens ein elektronisches Tickets gespeichert ist, das den gültigen Ticketdaten entspricht, kann die verfügbare Nutzerberechtigungsinformation als eine gültige Nutzerberechtigungsinformation bewertet werden. In oben beschriebener Weise kann ein entsprechendes gültiges Inspektionsmerkmal ausgegeben werden.

In Ticket-basierten Systemen, die eine Entwertung des elektronischen Tickets bei Beginn der Dienstleistung erwarten, kann ein elektronisches Ticket zudem in dem mobilen Nutzerendgerät (bei einer entsprechenden Entwertung) als entwertet gekennzeichnet sein, damit die verfügbare Nutzerberechtigungsinformation als eine gültige Nutzerberechtigungsinformation bewertet werden kann. Ein nicht entwertetes Ticket kann dementsprechend eine ungültige Nutzerberechtigungsinformation sein. In oben beschriebener Weise wird entsprechend kein gültiges Inspektionsmerkmal ausgegeben; insbesondere kann stattdessen ein ungültiges Inspektionsmerkmal ausgegeben werden.

Ein weiterer Aspekt der Anmeldung ist ein System, insbesondere Transportsystem. Das System umfasst mindestens eine mobile Inspektionsvorrichtung und mindestens ein zu kontrollierendes mobiles Nutzerendgerät. Die mobile Inspektionsvorrichtung ist eingerichtet zum Aussenden mindestens eines ersten Inspektionsdatensatzes während einer ersten Sendephase. Mindestens ein Kommunikationsmodul des mobilen Nutzerendgeräts ist eingerichtet zum Empfangen des mindestens einen ersten Inspektionsdatensatzes. Mindestens ein erstes Ausgabemodul des mobilen Nutzerendgeräts ist eingerichtet zum Ausgeben mindestens eines ersten Inspektionsmerkmals während der ersten Sendephase, basierend auf dem empfangenen ersten Inspektionsdatensatz und mindestens einer in dem mobilen Nutzerendgerät verfügbaren Nutzerberechtigungsinformation. Mindestens ein zweites Ausgabemodul der mobilen Inspektionsvorrichtung ist eingerichtet zum Ausgeben mindestens eines ersten zu dem ersten Inspektionsdatensatz korrespondierenden Gültigkeitsmerkmals während der ersten Sendephase.

Das System kann insbesondere unter Verwendung des zuvor beschriebenen Kontrollverfahrens betrieben werden.

Ein noch weiterer Aspekt der Anmeldung ist eine mobile Inspektionsvorrichtung. Die Mobile Inspektionsvorrichtung umfasst mindestens ein Kommunikationsmodul, eingerichtet zum Aussenden mindestens eines ersten Inspektionsdatensatzes während einer ersten Sendephase, wobei der erste Inspektionsdatensatz eingerichtet ist zum Bewirken eines Ausgebens, durch mindestens ein erstes Ausgabemodul des mobilen Nutzerendgeräts, mindestens eines ersten Inspektionsmerkmals während der ersten Sendephase, basierend auf dem empfangenen ersten Inspektionsdatensatz und mindestens einer in dem mobilen Nutzerendgerät verfügbaren Nutzerberechtigungsinformation. Weiter umfasst die Mobile Inspektionsvorrichtung mindestens ein zweites Ausgabemodul, eingerichtet zum Ausgeben mindestens eines ersten zu dem ersten Inspektionsdatensatz korrespondierenden Gültigkeitsmerkmals während der ersten Sendephase.

Das Kommunikationsmodul kann insbesondere eine Nahfeld-Kommunikationsschnittstelle umfassen, die zu einer Nahfeld-Kommunikationsschnittstelle des mindestens einen zu kontrollierenden mobilen Nutzerendgerät kompatibel ist. Vorzugsweise kann die Nahfeld-Kommunikationsschnittstelle eine Bluetooth-Schnittstelle sein. Alternativ oder zusätzlich zu einer Bluetooth-Schnittstelle kann als Nahfeld-Kommunikationsschnittstelle auch eine Infrarot-Schnittstelle, WLAN (Wireless Local Area Network)-Schnittstelle etc. vorgesehen sein.

Die mobile Inspektionsvorrichtung kann insbesondere in einem zuvor beschriebenen System verwendet werden, um vorzugsweise eine Mehrzahl von mobilen Nutzerendgeräten zu kontrollieren.

Ein weiterer Aspekt der Anmeldung ist ein Verfahren zum Betreiben einer mobilen Inspektionsvorrichtung, insbesondere einer zuvor beschriebenen mobilen Inspektionsvorrichtung. Das Verfahren umfasst:
- Aussenden, durch die mobile Inspektionsvorrichtung, mindestens eines ersten Inspektionsdatensatzes während einer ersten Sendephase,
- wobei der erste Inspektionsdatensatz eingerichtet ist zum Bewirken eines Ausgebens, durch mindestens ein erstes Ausgabemodul des mobilen Nutzerendgeräts, mindestens eines ersten Inspektionsmerkmals während der ersten Sendephase, basierend auf dem empfangenen ersten Inspektionsdatensatz und mindestens einer in dem mobilen Nutzerendgerät verfügbaren Nutzerberechtigungsinformation,
- Ausgeben, durch ein zweites Ausgabemodul der mobilen Inspektionsvorrichtung, mindestens eines ersten zu dem ersten Inspektionsdatensatz korrespondierenden Gültigkeitsmerkmals während der ersten Sendephase.

Ein noch weiterer Aspekt der Anmeldung ist eine Dienstleistungsnutzungsanwendung, insbesondere eine Raumerfassungsanwendung, zur Installation auf einem mobilen Nutzerendgerät. Die Dienstleistungsnutzungsanwendung umfasst mindestens ein Empfangsmodul, eingerichtet zum Empfangen mindestens eines ersten, durch eine mobile Inspektionsvorrichtung während einer ersten Sendephase ausgesendeten ersten Inspektionsdatensatzes. Die Dienstleistungsnutzungsanwendung umfasst mindestens ein Verarbeitungsmodul, eingerichtet zum Bewirken eines Ausgebens, durch mindestens ein erstes Ausgabemodul des mobilen Nutzerendgeräts, mindestens eines ersten Inspektionsmerkmals während der ersten Sendephase, basierend auf dem empfangenen ersten Inspektionsdatensatz und mindestens einer in dem mobilen Nutzerendgerät verfügbaren Nutzerberechtigungsinformation.

Die Dienstleistungsnutzungsanwendung kann insbesondere eine Softwareanwendung sein, die auf einem mobilen Nutzerendgerät als sogenannte App installiert werden kann. Die Softwareanwendung kann als Module insbesondere ausführbaren Code umfassen.

Ein weiterer Aspekt der Anmeldung ist ein mobiles Nutzerendgerät, auf dem die zuvor beschriebene Dienstleistungsnutzungsanwendung installiert ist.

Ein Modul oder eine Einheit kann zumindest teilweise aus Software und/oder zumindest teilweise aus Hardware gebildet sein. Insbesondere kann eine Vorrichtung /ein Element geeignete Rechenelemente (z.B. Prozessor, Speicher, etc.) umfassen.

Die Merkmale der Verfahren, Systeme, Vorrichtungen und Anwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Kontrollverfahren, das anmeldungsgemäße System, die anmeldungsgemäße mobile Inspektionsvorrichtung, das anmeldungsgemäße Verfahren zum Betreiben einer mobilen Inspektionsvorrichtung und die anmeldungsgemäße Dienstleistungsnutzungsanwendung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Systems, insbesondere eines Transportsystems, gemäß der vorliegenden Anmeldung,
- Fig. 2a: eine schematische Ansicht eines mobilen Nutzerendgeräts und einer mobilen Inspektionsvorrichtung bei einer auf dem mobilen Nutzerendgerät verfügbaren gültigen Nutzerberechtigungsinformation,
- Fig. 2b: eine schematische Ansicht eines mobilen Nutzerendgeräts und einer mobilen Inspektionsvorrichtung bei einer auf dem mobilen Nutzerendgerät verfügbaren semi-gültigen Nutzerberechtigungsinformation,
- Fig. 2c: eine schematische Ansicht eines mobilen Nutzerendgeräts und einer mobilen Inspektionsvorrichtung bei einer auf dem mobilen Nutzerendgerät verfügbaren ungültigen Nutzerberechtigungsinformation,
- Fig. 3: ein Diagramm eines Ausführungsbeispiels eines Kontrollverfahrens gemäß der vorliegenden Anmeldung, und
- Fig. 4: eine schematische Ansicht eines Ausführungsbeispiels eines mobilen Nutzerendgeräts gemäß der vorliegenden Anmeldung.

Nachfolgend werden für gleiche Elemente gleiche Bezugszeichen verwendet.

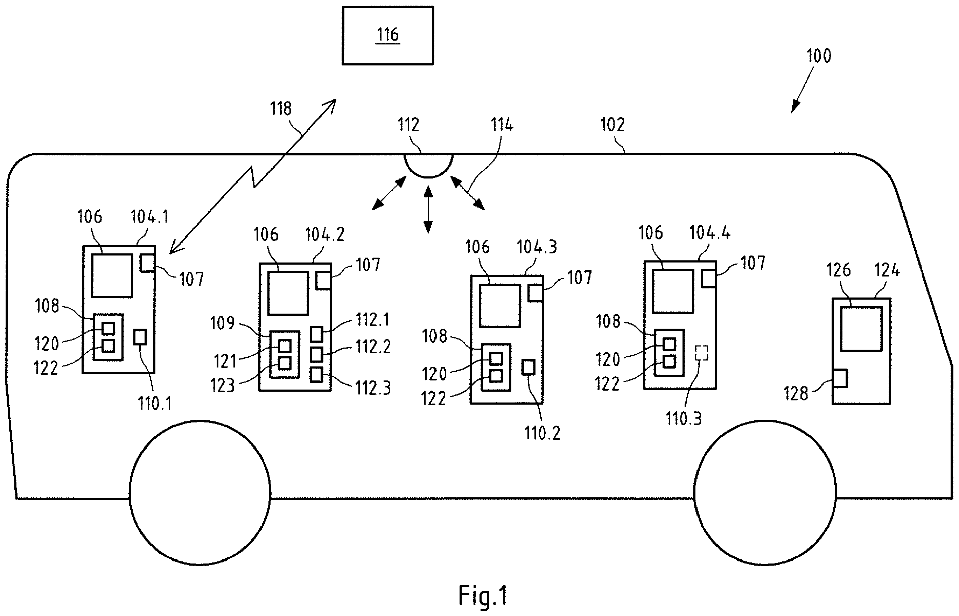

Figur 1 zeigt eine schematische Ansicht eines Ausführungsbeispiels eines Systems 100 gemäß der vorliegenden Anmeldung. Bei dem im vorliegenden Ausführungsbeispiel dargestellten System 100 handelt es sich um ein Transportsystem 100, bei dem eine Transportdienstleistung von Nutzern in Anspruch genommen werden kann. Die nachfolgenden Ausführungen lassen sich in einfacher Weise auf andere Systeme übertragen, bei denen Nutzer andere Dienstleistungen in Anspruch nehmen, wie eine Teilnahme an einer Veranstaltung (z.B. Konzert, Theater, Sportveranstaltung etc.).

Vorliegend umfasst das System 100 eine Transportvorrichtung 102. Beispielhaft ist als Transportvorrichtung 102 ein Bus 102 dargestellt, der von Nutzern in Anspruch genommen werden kann. Es versteht sich, dass bei anderen Varianten der Anmeldung andere Transportvorrichtungen verwendet werden können.

Um die Transportdienstleistung zu nutzen, kann jeder Nutzer sein mobiles Nutzerendgerät 104.1 bis 104.4 verwenden. Bei dem dargestellten System 100 kann es sich insbesondere um ein hybrides System 100 handeln. Ein hybrides System 100 kombiniert hierbei ein Raumerfassungssystem und ein Ticket-basiertes System. Es versteht sich, dass bei anderen Varianten das System ausschließlich ein Raumerfassungssystem oder ein Ticket-basiertes System sein kann.

In der Figur 1 ist schematisch eine Mehrzahl von mobilen Nutzerendgeräten 104.1 bis 104.4 dargestellt. Jedes mobile Nutzerendgerät 104.1 bis 104.4 kann über mindestens ein erstes Ausgabemodul 106 verfügen, vorliegend in Form eines grafischen Anzeigemoduls 106 (z.B. Touchdisplay). Zusätzlich kann ein mobiles Nutzerendgerät 104.1 bis 104.4 über mindestens ein (nicht gezeigtes) akustisches Ausgabemodul (z.B. Lautsprecher) verfügen. Darüber hinaus kann jedes mobile Nutzerendgerät 104.1 bis 104.4 vorzugsweise mindestens ein Kommunikationsmodul 107, insbesondere eine Mehrzahl von Kommunikationsmodulen 107 für die Nutzung einer Mehrzahl von (drahtlosen) Kommunikationstechnologien, aufweisen. Beispielshafte und nicht abschließende Nahfeld-Kommunikationstechnologien sind Bluetooth, Infrarot und WLAN, und beispielhafte und nicht abschließende Fern-Kommunikationstechnologien sind GSM (Global System for Mobile Communications), UMTS (Universal Mobile Telecommunications System) und LTE (Long Term Evolution). In einer weiteren Ausführungsform kann vorgesehen sein, dass die mobilen Nutzerendgeräte 104.1 bis 104.4 nicht über eine Fern-Kommunikationsschnittstelle verfügen, sondern nur über Nahfeld-Kommunikationsschnittstellen. Dies kann insbesondere der Fall sein, wenn die mobilen Nutzerendgeräte dedizierte Ticketing-Geräte sind.

Ein mobiles Nutzerendgerät 104.1 bis 104.4 kann beispielsweise ein Smartphone, Tablet-Computer, mobile Spielkonsole, Laptop, Netbook, Datenbrille oder Smart-Watch sein, die von einem Nutzer während der Inanspruchnahme der Transportdienstleistung mitgeführt werden kann. Alternativ kann ein mobiles Nutzerendgerät ein dediziertes Ticketing-Gerät sein, dass ausschließlich für eine Ticketing-Anwendung ausgelegt ist.

Um die Transportdienstleistung in berechtigter Weise in Anspruch nehmen zu können, ist es vorliegend erforderlich, dass auf dem mobilen Nutzerendgerät 104.1 bis 104.4 jeweils mindestens eine Dienstleistungsnutzungsanwendung 108, 109, beispielsweise eine Ticketanwendung 109 und/oder eine Raumerfassungsanwendung 108, installiert ist. Eine Dienstleistungsnutzungsanwendung 108, 109 weist ein Empfangsmodul 120, 121 und ein Verarbeitungsmodul 122, 123 auf. Insbesondere kann die Dienstleistungsnutzungsanwendung Computercode umfassen, der von dem mobilen Nutzerendgerät 104.1 bis 104.2 ausgeführt werden kann.

Zudem ist in den dargestellten mobilen Nutzerendgeräten 104.1 bis 104.2 jeweils eine schematisch dargestellte Nutzerberechtigungsinformation 110.1 bis 110.3, 112.1 bis 112.3 verfügbar.

Ferner ist in der Figur 1 eine mobile Inspektionsvorrichtung 124 eines Kontrolleurs dargestellt. Die mobile Inspektionsvorrichtung 124 umfasst mindestens ein zweites Ausgabemodul 126 und mindestens ein Kommunikationsmodul 128. Das zweite Ausgabemodul 126 kann insbesondere ein grafisches Anzeigemodul 126 sein. Alternativ oder zusätzlich kann mindestens ein (nicht gezeigtes) akustisches Ausgabemodul (z.B. Lautsprecher) vorgesehen sein. Das Kommunikationsmodul 128 kann insbesondere eine drahtlose Nahfeld-Kommunikationsschnittstelle umfassen, beispielsweise eine Bluetooth-Schnittstelle. Insbesondere kann das Kommunikationsmodul 128 eine Nahfeld-Kommunikationsschnittstelle umfassen, die kompatibel ist zu wenigstens einer der Nahfeld-Kommunikationsschnittstellen, die in den Kommunikationsmodulen 107 der mobilen Nutzerendgeräte verfügbar sind. Eine mobile Inspektionsvorrichtung 124 kann beispielsweise ein Smartphone, Tablet-Computer, mobile Spielkonsole, Laptop, Netbook, Datenbrille oder Smart-Watch sein.

Wie ferner der Figur 1 entnommen werden kann, verfügt die Transportvorrichtung 102 über mindestens eine Erfassungseinrichtung 112, insbesondere in Form einer Nahfeld-Sende-/Empfangseinrichtung 112, eingerichtet zum Austauschen von Nachrichten mit den in der Transportvorrichtung 102 befindlichen mobilen Nutzerendgeräten 104.1 bis 104.4 über ein Nahfeld-Kommunikationsdatennetz 114 (z.B. Bluetooth, WLAN etc.).

Darüber hinaus kann das System 100 mindestens ein entfernt zu der Transportvorrichtung 102 angeordnetes Hintergrundsystem 116, z.B. in Form von einem oder mehreren Server/n 116, umfassen. Es kann zumindest vorgesehen sein, dass die mobilen Nutzerendgeräte 104.1 bis 104.4 über ein Fern-Kommunikationsdatennetz 118 (z.B. Mobilfunk in Form von GSM, LTE etc.) mit dem Hintergrundsystem 116 kommunizieren können. In einer weiteren, nicht gezeigten Ausführungsform, können die mobilen Nutzerendgeräte 104.1 bis 104.4 nicht über eine Fern-Kommunikationsschnittstelle verfügen, sondern nur über Nahfeld-Kommunikationsschnittstellen. In diesem Fall kann eine Kommunikation zwischen den mobilen Nutzerendgeräte 104.1 bis 104.4 und dem Hintergrundsystem 116 über die Erfassungseinrichtung 112 erfolgen.

Das erste mobile Nutzerendgerät 104.1 weist als Nutzerberechtigungsinformation 110.1 eine gültige Nutzerberechtigungsinformation 110.1 auf. Insbesondere kann ein entsprechender Gültigkeitszustand als Nutzerberechtigungsinformation 110.1 in dem ersten mobilen Nutzerendgerät 104.1 gespeichert sein. Vorzugsweise kann nach einer erfolgreichen Anmeldung des mobilen Nutzerendgeräts 104.1 an dem Hintergrundsystem 116 (z.B. entsprechend den zuvor genannten Verfahren BIBO, CIBO oder CICO) eine gültige Nutzerberechtigungsinformation 110.1 auf dem mobilen Nutzerendgerät 104.1 verfügbar sein, indem eine entsprechende Information in einem Speichermodul des Nutzerendgeräts 104.1 gespeichert wird. Beispielsweise kann eine durch das Hintergrundsystem 116 nach einer erfolgreichen Authentifizierung des mobilen Nutzerendgeräts 104.1 gesendete Quittungsnachricht als gültige Nutzerberechtigungsinformation 110.1 gespeichert werden. Diese kann, basierend auf den mit der Erfassungseinrichtung 112 ausgetauschten Anwesenheitsnachrichten, z.B. durch die Raumerfassungsanwendung 108, während der Nutzung der Dienstleistung aktualisiert werden.

Auf dem beispielhaft dargestellten zweiten mobilen Nutzerendgerät 104.2 sind als Nutzerberechtigungsinformationen 112.1 bis 112.3 eine Mehrzahl von elektronischen Tickets 112.1 bis 112.3 verfügbar. Es wird nachfolgend davon ausgegangen, dass zumindest eines der gespeicherten elektronischen Tickets 112.1 bis 112.3 für die Nutzung einer augenblicklichen Transportdienstleistung berechtigt.

Das dritte mobile Nutzerendgerät 104.3 weist eine semi-gültige Nutzerberechtigungsinformation 110.2 auf. Ein entsprechender Zustand kann beispielsweise dann in einem (nicht gezeigten) Speichermodul des mobilen Nutzerendgeräts 104.3 gespeichert werden, wenn die Raumerfassungsanwendung 108 den Anmeldeprozess an dem Hintergrundsystem initiiert hat (und z.B. regelmäßig erneut versucht hat), jedoch keine oben beschriebene Quittungsnachricht erhalten hat. Grund hierfür kann beispielsweise sein, dass keine Kommunikationsverbindung mit dem Hintergrundsystem 116 hergestellt werden kann.

Auf dem dargestellten vierten mobilen Nutzerendgerät 104.4 ist als Nutzerberechtigungsinformation 110.3 vorliegend eine ungültige Nutzerberechtigungsinformation 110.3 verfügbar. Diese kann beispielsweise dadurch gegeben sein, dass keine Quittungsnachricht und insbesondere auch keine Versuche einer Anmeldung am Hintergrundsystem gespeichert sind oder nur eine Quittungsnachricht von einer früheren Nutzung einer Transportdienstleistung.

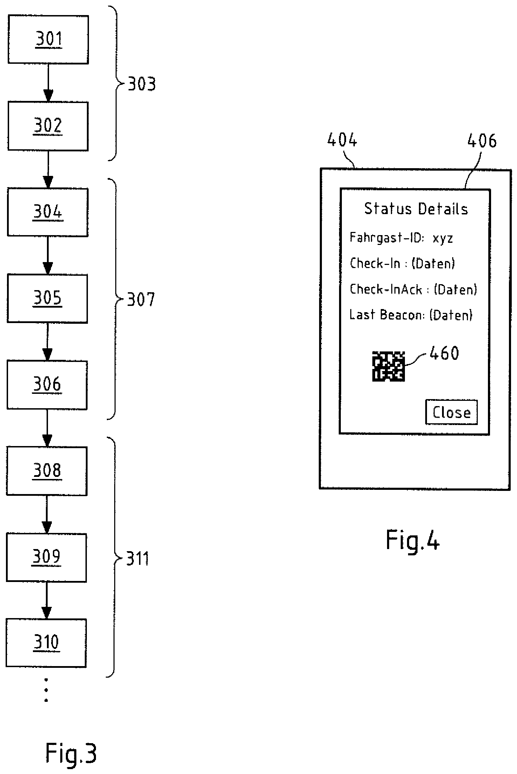

Nachfolgend wird mittels der Figuren 1 und 3 beispielhaft ein Inspektionsprozess beschrieben. Die Figur 3 zeigt ein Diagramm eines Ausführungsbeispiels eines Kontrollverfahrens gemäß der vorliegenden Anmeldung zum Überprüfen einer Nutzerberechtigung eines Nutzers für die Inanspruchnahme einer Transportdienstleistung.

In einem ersten Schritt 301 kann während einer Kontrollstartphase 303 ein Kontrolldatensatz ausgesendet werden, der eingerichtet ist, von den im zahlungspflichtigen Raum befindlichen mobilen Endgeräten empfangen zu werden. Vorzugsweise kann die Aussendung des Kontrolldatensatzes zumindest durch die mobile Inspektionsvorrichtung 124 initiiert werden. Beispielsweise kann eine Kommunikationsverbindung zwischen der mobilen Inspektionsvorrichtung 124 und der Erfassungseinrichtung 112 hergestellt werden. Durch Übertragen einer entsprechenden Befehlsinstruktion über die Kommunikationsverbindung an die Erfassungseinrichtung 112 kann diese instruiert werden, den Kontrolldatensatz über das Nahfeld-Kommunikationsnetz 114 auszusenden.

Auch kann die mobile Inspektionsvorrichtung 124 eingerichtet sein, den Kontrolldatensatz auszusenden. Beispielsweise kann das mindestens eine Kommunikationsmodul 128 der mobilen Inspektionsvorrichtung 124 zur Aussendung eingesetzt werden.

Die Aussendung des Kontrolldatensatzes kann dauerhaft (periodisch) während des gesamten Inspektionsprozesses erfolgen. Es versteht sich, dass bei anderen Varianten der Anmeldung auch unterschiedliche Kontrolldatensätze ausgesendet werden können, um die mobilen Nutzerendgeräte am Anfang des Inspektionsprozesses in den Kontrollmodus und am Ende des Inspektionsprozesses in den normalen Betriebsmoduls zu setzen.

Vorzugsweise kann der Kontrolldatensatz nach dem BLE (Bluetooth Low Energy)-Standard ausgesendet werden. Daten, die nach dem BLE-Standard ausgesendet werden, sind von nahezu jedem mobilen Nutzerendgerät 104.1 bis 104.4, insbesondere mit einem marktüblichem Betriebssystem (z.B. Apple iOS, Google Android, Microsoft Windows Mobile, Microsoft Mobile Phone, Blackberry OS, Symbian OS, Firefox OS, Tizen, Aliyun OS), empfangbar.

Im Schritt 302 empfangen die Nutzerendgeräte 104.1 bis 104.4 jeweils mindestens einen Kontrolldatensatz.

Der Kontrolldatensatz kann mindestens eine Instruktion umfassen, die bewirkt, dass das empfangende mobile Nutzerendgerät 104.1 bis 104.4, insbesondere die auf dem mobilen Nutzerendgerät 104.1 bis 104.4 installierte Dienstleistungsnutzungsanwendung 108, 109, in einen Kontrollmodus gesetzt wird. Mit anderen Worten kann bei einem Empfang des Kontrolldatensatzes durch ein mobiles Nutzerendgerät 104.1 bis 104.4 das mobile Nutzerendgerät 104.1 bis 104.4 während eines Kontrollzeitraums in einen Kontrollmodus gesetzt werden.

Bei einem im Kontrollmodus befindlichen mobilen Nutzerendgerät 104.1 bis 104.4 kann zumindest das Anmelden an dem Hintergrundsystem und/oder das Erwerben eines elektronischen Tickets und/oder das Entwerten eines elektronischen Tickets gesperrt bzw. blockiert sein. Insbesondere kann eine Änderung der in dem mobilen Nutzerendgerät 104.1 bis 104.4 verfügbaren Nutzerberechtigungsinformation gesperrt sein. Hierdurch kann verhindert werden, dass sich ein Nutzer während des Inspektionsprozesses anmeldet, ein Ticket erwirbt und/oder ein Ticket entwertet.

Während einer sich an die Kontrollstartphase 303 anschließenden ersten Sendephase 307 wird in einem Schritt 304 durch die mobile Inspektionsvorrichtung 124, insbesondere durch das Kommunikationsmodul 128, mindestens ein erster Inspektionsdatensatz gesendet. Der ersten Inspektionsdatensatz ist eingerichtet, von den sich in Reichweite des durch die mobile Inspektionsvorrichtung ausgesendeten Inspektionsfelds bzw. -signals empfangen zu werden. Beispielhaft empfangen die zu kontrollierenden mobilen Nutzerendgeräte 104.1 bis 104.4 jeweils mindestens einen ersten Inspektionsdatensatz.

Ein Inspektionsdatensatz umfasst Daten, die (nach ihrer Verarbeitung durch das mobile Nutzerendgerät) bewirken, dass ein erstes Inspektionsmerkmal, durch mindestens ein erstes Ausgabemodul 106 des mobilen Nutzerendgeräts 104.1 bis 104.4, während der ersten Sendephase 307 in einem Schritt 305 ausgegeben, insbesondere angezeigt, wird. Insbesondere kann ein durch ein mobiles Nutzerendgerät 104.1 bis 104.4 empfangener Inspektionsdatensatz zur weiteren Verarbeitung über das Empfangsmodul 120, 121 einem Verarbeitungsmodul 122, 123 der installierten Dienstleistungsnutzungsanwendung 108, 109 zur Verfügung gestellt werden. Das Verarbeitungsmodul 122, 123 kann, gemäß einem bevorzugten Ausführungsbeispiel, wie folgt einen Inspektionsdatensatz verarbeiten:
Zunächst kann das Verarbeitungsmodul 122, 123 prüfen, welche Art von Nutzerberechtigungsinformation (gültig, semi-gültig oder ungültig) in dem mobilen Nutzerendgerät 104.1 bis 104.4 verfügbar ist. Für jeden Zustand kann eine separate Zuordnungstabelle in dem mobilen Nutzerendgerät 104.1 bis 104.4 gespeichert sein, in denen gespeicherte Merkmalsattribute jeweils eindeutig Inspektionsinstruktionen zugeordnet sind (vgl. Tabelle 2).

Die aus einem empfangenen Inspektionsdatensatz extrahierten Inspektionsinstruktionen werden auf die mittels der verfügbaren Nutzerberechtigungsinformation (gültig, semi-gültig oder ungültig) bestimmten Zuordnungstabelle angewendet. Insbesondere werden, basierend auf den Zuordnungen, die Merkmalsattribute bestimmt, aus denen das zugehörige Inspektionsmerkmal in Form einer grafischen und/oder akustischen Sequenz generiert wird. Dann bewirkt das Verarbeitungsmodul 122, 123 das Ausgeben des Inspektionsmerkmals, insbesondere das Anzeigen der generierten grafischen Sequenz durch das erste Anzeigemodul 106 und/oder das Wiedergeben der generierten akustischen Sequenz durch einen (hier nicht gezeigten) Lautsprecher.

Die zuvor beschriebene Verarbeitung kann insbesondere in Echtzeit erfolgen, so dass unmittelbar nach Start der ersten Sendephase 307 das erste Inspektionsmerkmal angezeigt wird.

Während der ersten Sendephase 307 wird zudem in Schritt 306 durch mindestens ein zweites Ausgabemodul 126 der mobilen Inspektionsvorrichtung mindestens ein erstes zu dem ersten Inspektionsdatensatz korrespondierendes Gültigkeitsmerkmal ausgegeben, d.h. dass der Dateninhalt des Inspektionsdatensatzes insbesondere das ausgegebene Gültigkeitsmerkmal eindeutig definiert. Dies ermöglicht es einem Kontrolleur, durch ein Vergleichen des auf der mobilen Inspektionsvorrichtung 124 ausgegebenen Gültigkeitsmerkmals und dem gleichzeitig auf dem mindestens einen zu kontrollierenden mobilen Nutzerendgerät 104.1 bis 104.4 ausgegebenen Inspektionsmerkmal eine einfache Überprüfung der Berechtigung eines Nutzers. Auch in der mobilen Inspektionsvorrichtung 124 kann eine Zuordnungstabelle gespeichert sein, der die Generierung des Gültigkeitsmerkmals in Abhängigkeit von der augenblicklich ausgesendeten Inspektionsinstruktionen erlaubt.

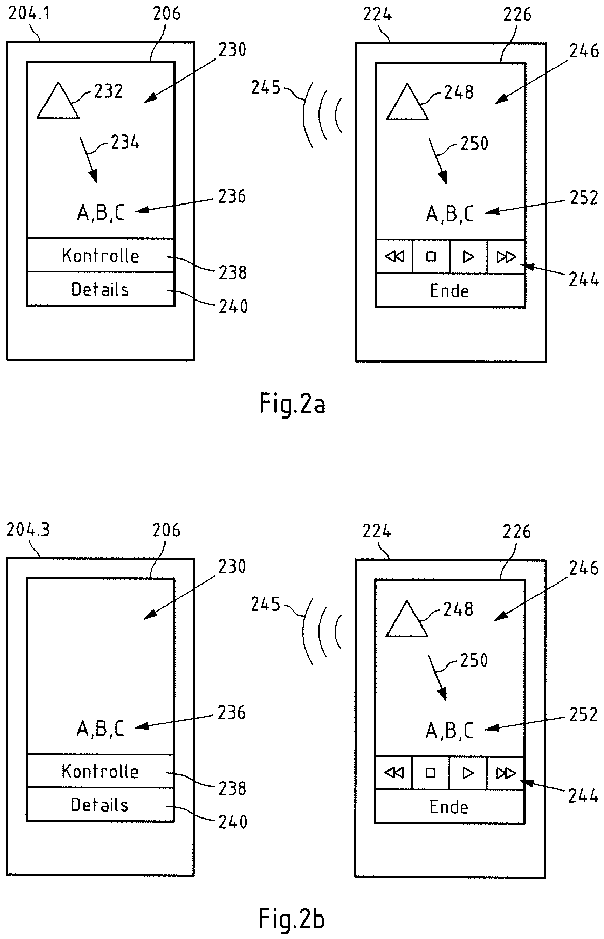

Eine nähere Beschreibung der Überprüfung durch einen Kontrolleur erfolgt weiter unten in Verbindung mit einer Beschreibung der Figuren 2a bis 2c.

Das erste Inspektionsmerkmal und das erste Gültigkeitsmerkmal werden bis zum Ende der ersten Sendephase 307 ausgegeben. Die Dauer der ersten Sendephase 307 entspricht im Wesentlichen der Zeitdauer, während der der erste Inspektionsdatensatz durch die mobile Inspektionsvorrichtung 124 ausgesendet wird. Allgemein endet eine Sendephase und es beginnt eine neue Sendephase, wenn sich der Inspektionsdatensatz, insbesondere mindestens eine Inspektionsinstruktion, ändert. Es versteht sich, dass eine Sendephase auch dadurch enden kann, dass kein weiterer Inspektionsdatensatz mehr ausgesendet wird und das Kontrollverfahren beendet oder unterbrochen wird.

Vorliegend schließt sich an die erste Sendephase 307 eine zweite Sendephase 311 an. Während der zweiten Sendephase 311 sendet die mobile Inspektionsvorrichtung 124 einen zweiten Inspektionsdatensatz aus, der sich von dem ersten Inspektionsdatensatz in zumindest einer Inspektionsinstruktion unterscheidet. Beispielsweise entsprechend den Ausführungen zum Schritt 305 kann in Schritt 309 ein zweites Inspektionsmerkmal auf den mobilen Nutzerendgeräten 104.1 bis 104.4 ausgegeben werden. Zudem kann in Schritt 310, beispielsweise entsprechend den Ausführungen zu Schritt 306, ein zweites Gültigkeitsmerkmal ausgegeben werden.

Indem während eines Inspektionsprozesses mindestens zwei verschiedene Inspektionsdatensätze ausgesendet werden, die ein Ausgeben von zwei unterschiedlichen gültigen Inspektionsmerkmalen sowie zwei unterschiedlichen Gültigkeitsmerkmalen bewirken, kann ein kopiertes und weitergeleitetes Inspektionsmerkmal detektiert werden.

Die zeitliche Länge der Sendephasen 307, 311 kann gleich sein. Auch kann die zeitliche Länge der Sendephase 307, 311 variiert werden, beispielsweise durch einen Zufallsgenerator oder durch den Kontrolleur, indem die mobile Inspektionsvorrichtung über mindestens ein betätigbares Nutzereingabemodul verfügt.

Ferner können die unterschiedlichen Inspektionsdatensätze in einer vorher festgelegten Reihenfolge ausgesendet werden. Auch kann die Reihenfolge der unterschiedlichen Inspektionsdatensätze durch einen Zufallsgenerator oder durch den Kontrolleur beeinflusst werden, indem die mobile Inspektionsvorrichtung über ein entsprechendes Nutzereingabemodul verfügt. Auch dies wird näher mittels der Figuren 2a bis 2c erläutert.

Wie in der Figur 3 angedeutet ist, können sich weitere Sendephasen an die zweite Sendephase 311 anschließen.

Bei einem Ticket-basierten Verfahren kann in den Schritten 304 und 308 durch die mobile Inspektionsvorrichtung 124 mindestens ein Referenzticketdatensatz zusammen mit dem jeweiligen Inspektionsdatensatz ausgesendet werden. Beispielsweise kann der Inspektionsdatensatz Ticketdaten umfassen.

Das Ausgeben, durch das erste Ausgabemodul 106, eines Inspektionsmerkmals in den Schritten 305 und 309 kann ferner auf dem empfangenen Referenzticketdatensatz basieren. Insbesondere können die erhaltenen Ticketdaten von dem Verarbeitungsmodul 123 mit den Ticketdaten des wenigsten einen gespeicherten elektronischen Tickets abgeglichen werden.

Insbesondere kann der ausgesendete Referenzticketdatensatz Angaben (z.B. Tarifinformationen etc.) darüber enthalten, welche auf den mobilen Nutzerendgeräten 104.2 gespeicherten elektronischen Tickets gültig für die überwachte Dienstleistung sind. Wenn eine Entwertung des elektronischen Tickets erforderlich ist, kann auch diese Information in dem Referenzticketdatensatz enthalten sein. Mit anderen Worten enthält der ausgesendete Referenzticketdatensatz Angaben darüber, welche Art von elektronischem Ticket auf den mobilen Nutzerendgeräten 104.2 gespeichert sein müssen, damit die Transportdienstleistung in gültiger Weise beansprucht wird.

Für ein positives Ergebnis (gültiges elektronisches Ticket) können eine erste Zuordnungstabelle und für ein negatives Ergebnis (kein gültiges elektronisches Ticket) eine zweite Zuordnungstabelle in dem mobilen Nutzerendgerät 104.2 gespeichert sein, in denen gespeicherte Merkmalsattribute Inspektionsinstruktionen zugeordnet sind. Die aus einem empfangenen Inspektionsdatensatz extrahierten Inspektionsinstruktionen werden auf die Zuordnungstabelle angewendet, die basierend auf dem Abgleich der Ticketdaten bestimmt wurde. Insbesondere werden, basierend auf den Zuordnungen die Merkmalsattribute bestimmt, aus denen das zugehörige Inspektionsmerkmal in Form einer grafischen und/oder akustischen Sequenz generiert wird. Dann bewirkt das Verarbeitungsmodul 123 das Ausgeben des Inspektionsmerkmals, insbesondere das Anzeigen der generierten grafischen Sequenz durch das erste Anzeigemodul 106 und/oder das Wiedergeben der generierten akustischen Sequenz durch einen (hier nicht gezeigten) Lautsprecher.

Das Kontrollverfahren kann beendet werden, wenn beispielsweise die (periodische) Aussendung des Kontrollsignals bzw. des Kontrolldatensatzes ausbleibt. In diesem Fall empfangen die mobilen Nutzerendgeräte 104.1 bis 104.4 keinen Kontrolldatensatz mehr, so dass sie in den normalen Betriebsmodus gesetzt werden. Beispielsweise können sie in diesem Modus erneut Anwesenheitsmeldungen mit der Erfassungseinrichtung 112 austauschen.

Wenn keine Erfassungseinrichtung vorhanden ist, kann bevorzugt die mobile Inspektionsvorrichtung 124 des Kontrolleurs ein Kontrollsignal mit großer Leistung aussenden und die mobilen Nutzerendgeräte 104.1 bis 104.4 veranlassen, sich für einen konfigurierbaren Kontrollzeitraum in den Kontrollmodus zu versetzen, d.h. insbesondere keine Entwertungsvorgänge zuzulassen. Die mobilen Nutzerendgeräte 104.1 bis 104.4 können den Kontrollmodus nach Verstreichen des Kontrollzeitraums selbsttätig beenden, oder die mobile Inspektionsvorrichtung 124 kann ein entsprechendes Signal zur Beendigung des Kontrollmodus senden, wie zuvor ausgeführt wurde.

Es versteht sich, dass bei anderen Varianten der anmeldungsgemäßen Verfahren auch nur ein Inspektionsdatensatz ausgesendet werden kann. Beispielsweise sendet eine Inspektionsvorrichtung (oder die Erfassungseinrichtung des zahlungspflichtigen Raums) zumindest einen ersten Inspektionsdatensatz aus, um ein Ausgeben von entsprechend variablen (gültigen) Inspektionsmerkmalen durch das mindestens eine zu kontrollierende mobile Nutzerendgerät zu bewirken. So kann z.B. das Empfangen eines ersten Inspektionsdatensatzes auf den mobilen Nutzerendgeräten, die gültig benutzt werden, zum Beispiel das (periodische) Abspielen einer ersten grafischen Sequenz als erstes Inspektionsmerkmal auslösen. Dabei kann die erste grafische Sequenz insbesondere so gestaltet sein, dass sich für die erwartete Dauer eines Inspektionsprozesses (beispielsweise: bis zu 10 Minuten) keine Bildfolgen wiederholen.

Die Figuren 2a bis 2c zeigen schematische Ansichten von mobilen Nutzerendgeräten 204.1 bis 204.4, abhängig von der jeweils verfügbaren Nutzerberechtigungsinformation, und jeweils eine mobilen Inspektionsvorrichtung 224 während eines Ausführungsbeispiels eines zuvor beschriebenen Kontrollverfahrens.

Die Figur 2a zeigt ein Ausführungsbeispiel, bei dem ein mobiles Nutzerendgerät 204.1 überprüft wird, das über eine gültige Nutzerberechtigungsinformation verfügt. Beispielsweise kann eine Quittungsnachricht oder ein gültiges elektronisches Ticket gespeichert sein. Das mobile Nutzerendgerät 204.1 weist ein erstes Anzeigemodul 206 auf. Beispielsweise kann das Nutzerendgerät 204.1 über einen Touchdisplay 206 verfügen.

In einem ersten Displaybereich kann das mindestens eine Inspektionsmerkmal 230 und in einem weiteren Displaybereich als Textfeld 238 der Begriff "Kontrolle" angezeigt werden. Optional kann zudem eine Nutzereingabetaste 240 "Details" durch das Touchdisplay 206 in einem weiteren Displaybereich dargestellt werden. Die Nutzereingabetaste 240 kann betätigt werden, um weitere Details über die genutzte Dienstleistung anzuzeigen, wie mittels der Figur 4 näher erläutert wird.

Neben dem mobilen Nutzerendgerät 204.1 ist eine mobile Inspektionsvorrichtung 224 dargestellt. Die mobile Inspektionsvorrichtung 224 weist ein zweites Anzeigemodul 226 auf. Beispielsweise kann die mobile Inspektionsvorrichtung 224 über einen Touchdisplay 226 verfügen. In einem ersten Displaybereich des Touchdisplays 226 kann ein Gültigkeitsmerkmal 246 angezeigt werden. Ein weiterer Displaybereich des Touchdisplays 226 kann ein Nutzereingabemodul 224, beispielsweise mit einer Mehrzahl von Eingabetasten, bereitstellen, die eingerichtet sind, die ausgegebenen Inspektionsdatensätze und/oder die Längen der Sendephasen zu beeinflussen. Es versteht sich, dass bei anderen Varianten der Anmeldung weitere Nutzereingabemodule, wie Spracheingabemodule, vorgesehen sein können.

Während eines Inspektionsprozesses sendet die mobile Inspektionsvorrichtung 224 ein Inspektionssignal 245 bzw. ein Inspektionsfeld 245 aus. Beispielsweise kann ein Bluetooth-Signal 245, insbesondere ein BLE-Signal 245, ausgesendet werden. Das Inspektionssignal ist Träger der jeweils ausgesendeten Inspektionsdatensätze.

Die Inspektionsdatensätze sind insbesondere authentisch. Hierunter ist vorliegend zu verstehen, dass es sichergestellt ist, dass ein potenzieller Betrüger nicht ein Inspektionssignal aufzeichnet, daraus Inspektionsdatensätze extrahiert und damit auf eigene Rechnung "Kontrollen" durchführen kann. Dazu können die Inspektionsdatensätze vorzugsweise einen Zeitstempel haben oder "salted" sein (also zum Zweck der Verschlüsselung und/oder Authentisierung zufällig gewählte Zeichen oder Zeichenfolgen haben, die an bestimmten Positionen in die Abfolge der eigentlichen Nutzdaten eingestreut sind). Alternativ sind auch Authentifizierungen auf Basis digitaler Signaturen oder digitaler Zertifikate denkbar. Hierzu können sowohl symmetrische als auch asymmetrische Verschlüsselungstechnologien als auch Public Key Infrastrukturen zum Einsatz kommen. Es versteht sich, dass bei anderen Varianten auch andere Mittel verwendet werden können, um authentische Inspektionssignale zu generieren.

Die Aussendung des Inspektionssignals 245 kann in Reaktion auf eine Detektion einer Betätigung des Nutzereingabemoduls 224 (z.B. der Start-Taste) ausgelöst werden.

Wie oben beschrieben wurde, kann während einer ersten Sendephase ein erster Inspektionsdatensatz gesendet werden. Basierend auf dem ersten Inspektionsdatensatz und der gültigen Nutzerberechtigungsinformation wird ein erstes gültiges Inspektionsmerkmal 230 mit einer Mehrzahl von Merkmalsattributen 232, 234, 236 ausgegeben. Das Inspektionsmerkmal 230 ist insbesondere eine grafische Filmsequenz. Diese kann zumindest solange dargestellt bzw. zyklisch durchlaufen werden, wie der erste Inspektionsdatensatz empfangen wird. Beispielhaft ist ein Dreieck 232 mit einer bestimmten Größe dargestellt, dass sich in der durch den Pfeil 234 dargestellten Richtung mit einer bestimmten Geschwindigkeit bewegt, während ein Textfeld 236 mit dem Inhalt "A, B, C" im unteren Bereich angezeigt wird.

Wie zu erkennen ist, wird im vorliegenden Ausführungsbeispiel auf dem zweiten Anzeigemodul 226 ein Gültigkeitsmerkmal 246 mit im Wesentlichen identischen Merkmalsattributen 248, 250, 252 (im Vergleich zu dem gültigen Inspektionsmerkmal) angezeigt. Mit anderen Worten ist das durch das erste Anzeigemodul 206 aufgrund der verfügbaren gültigen Nutzerberechtigungsinformation angezeigte gültige Inspektionsmerkmal 230 gleichartig (im Wesentlichen identisch) zu dem durch das zweite Anzeigemodul 226 angezeigten Gültigkeitsmerkmal 246. In einfacher Weise kann ein Kontrolleur durch einen Vergleich der jeweils angezeigten Merkmale 230, 246 feststellen, dass der Nutzer des mobilen Nutzerendgerät 204.1 zur Nutzung der Dienstleistung berechtigt ist.

Dies wird noch deutlicher mit Blick auf die Figur 2b, bei der ein mobiles Nutzerendgerät 204.3 überprüft wird, das über eine semi-gültige Nutzerberechtigungsinformation verfügt. Zur Vermeidung von Wiederholungen wird zunächst auf die Ausführungen zur Figur 2a verwiesen.

Während des Inspektionsprozesses wird wiederum der erste Inspektionsdatensatz ausgesendet. Aufgrund der semi-gültigen Nutzerberechtigungsinformation zeigt das erste Anzeigemodul 206 des mobilen Nutzerendgeräts 204.3 (im Vergleich zum Ausführungsbeispiel nach Figur 2a) ein semi-gültiges Inspektionsmerkmal 230 an, das sich von dem durch das zweite Anzeigemodul 226 angezeigten Gültigkeitsmerkmal 246 in mindestens einem zweiten Merkmalsattribut unterscheidet. Wie zu erkennen ist, wird insbesondere das Dreieck 248, welches sich in eine bestimmte Richtung 250 bewegt, nicht auf dem ersten Anzeigemodul 206 dargestellt. Aufgrund der Abweichung in mindestens einem Merkmalsattribut ist für einen Kontrolleur leicht ersichtlich, dass der Nutzer des mobilen Nutzerendgeräts 204.3 über eine semi-gültige Nutzerberechtigungsinformation verfügt.

Bei einer semi-gültigen Nutzerberechtigungsinformation kann das Kontrollverfahren die Option anbieten, dass beispielsweise das Anmelden des mobilen Nutzerendgeräts 204.3 an einem Hintergrundsystem unter Nutzung der mobilen Inspektionsvorrichtung 224 abgeschlossen wird.

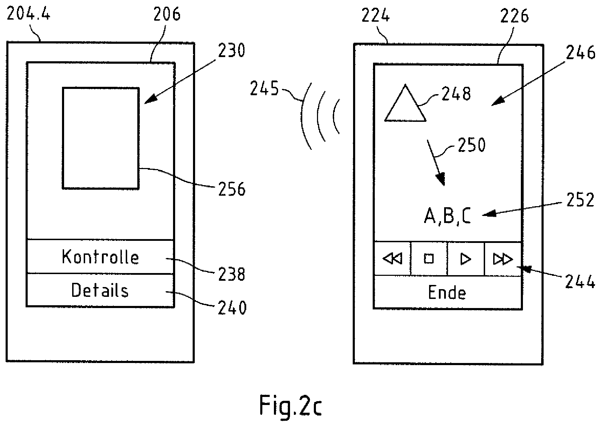

Die Figur 2c zeigt nun ein Ausführungsbeispiel, bei dem ein mobiles Nutzerendgerät 204.4 überprüft wird, das über eine ungültige Nutzerberechtigungsinformation verfügt. Zur Vermeidung von Wiederholungen wird zunächst auf die Ausführungen zu den Figuren 2a und 2b verwiesen.

Während des Inspektionsprozesses wird wiederum der erste Inspektionsdatensatz ausgesendet. Aufgrund der ungültigen Nutzerberechtigungsinformation zeigt das erste Anzeigemodul 206 des mobilen Nutzerendgeräts 204.4 (im Vergleich zum Ausführungsbeispiel nach Figur 2a oder 2b) ein ungültiges Inspektionsmerkmal 230 an, das sich von dem durch das zweite Anzeigemodul 226 angezeigten Gültigkeitsmerkmal 246 in mindestens einem ersten Merkmalsattribut unterscheidet. Wie zu erkennen ist, wird insbesondere weder das Dreieck 248, welches sich in eine bestimmte Richtung 250 bewegt, noch das Textfeld 252 auf dem ersten Anzeigemodul 206 dargestellt. Vielmehr kann beispielsweise ein Hintergrund 256 mit einer bestimmten Farbe (z.B. rot) angezeigt werden. Aufgrund der Abweichung in mindestens einem ersten Merkmalsattribut ist für einen Kontrolleur leicht ersichtlich, dass der Nutzer des mobilen Nutzerendgeräts 204.4 über keine gültige Nutzerberechtigungsinformation verfügt. Es versteht sich, dass in diesem Fall keine separate Zuordnungstabelle für den ungültigen Fall gespeichert sein kann, sondern stets unabhängig von den einzelnen Inspektionsinstruktionen das gleiche ungültige Inspektionsmerkmal 230 angezeigt werden kann.

Das Nutzereingabemodul 244 ermöglicht es insbesondere, die zeitliche Länge einer Sendephase und/oder den Inhalt eines Instruktionsdatensatzes zu beeinflussen. Beispielsweise können Merkmalsattribute, wie Bewegungsgeschwindigkeit oder -muster durch eine Betätigung des Nutzereingabemoduls 244 beeinflusst werden. Auch kann durch ein Betätigen der Tasten >> oder << ein Aussenden eines nächsten bzw. vorherigen Inspektionsdatensatzes bewirkt werden. Die mobile Inspektionsvorrichtung 224 ist eingerichtet, die ausgesendeten Daten in Reaktion auf die Detektion einer Betätigung des Nutzereingabemoduls 244 zu ändern.

Die Figur 4 zeigt eine schematische Ansicht eines Ausführungsbeispiels eines mobilen Nutzerendgeräts 404 gemäß der vorliegenden Anmeldung, bei dem auf dem ersten Anzeigemodul 406 Details über die genutzte Dienstleistung angezeigt werden. Die Anzeige der Details wird beispielsweise in Reaktion auf eine Detektion einer Betätigung der in den Figuren 2a bis 2c dargestellten Taste "Details" 240 bewirkt.

Beispielsweise kann die Fahrgast-ID des Nutzers angezeigt werden. Zudem kann ein Zeitstempel angezeigt werden. Beispielsweise kann angezeigt werden, wann der letzte Check-In oder versuchte Check-In am Hintergrundsystem stattgefunden hat. So kann bei einem erfolglosen Check-In ein Zeitstempel vorhanden sein, der belegt, dass der Nutzer sich für die aktuelle Dienstleistung anmelden wollte. Bei einem Nutzer, der zwar die Dienstleistungsnutzungsanwendung zur grundsätzlichen Nutzung der Dienstleistung (bzw. Teilnahme am Raumerfassungssystem) auf seinem mobilen Nutzerendgerät 404 installiert hat, sich aber für die aktuell kontrollierte Dienstleistung nicht am Hintergrundsystem angemeldet hat, kann dieser Zeitstempel vor Beginn der Dienstleistungserbringung (z.B. vor Beginn der aktuellen Fahrt) liegen. Es kann beispielsweise ein Check-In Zeitstempel von letzter Woche angezeigt sein.

Auch kann ein weiterer Zeitstempel angezeigt werden, wann die letzte Quittungsnachricht "Check-In-Quittung" von dem Hintergrundsystem erhalten wurde: Bei einem erfolgreichen Check-In ist das typischerweise einige Sekunden nach dem Check-In-Vorgang selbst. Bei einem erfolglosen Check-In kann die Quittungsnachricht in der Regel fehlen.

Bei einem Nutzer, der zwar die Dienstleistungsnutzungsanwendung für eine Teilnahme am Raumerfassungssystem installiert hat, sich aber für die aktuell kontrollierte Dienstleistung nicht angemeldet hat, kann der Zeitstempel auch vor Beginn der Dienstleistungserbringung (z.B. vor Beginn der aktuellen Fahrt) liegen. Es kann also dort bspw. eine Check-In-Quittung von letzter Woche angezeigt sein. Zudem kann ein Zeitstempel angezeigt werden, wann die letzte Anwesenheitsmeldung von der Erfassungseinrichtung, insbesondere das letzte Beacon-Signal der Erfassungseinrichtung, empfangen wurde.

Zumindest ein Teil dieser Daten kann vorzugsweise zusammen in einem optischen Code 460 (z.B. QR-Code oder Barcode) auf dem Anzeigemodul 406 dargestellt werden, so dass sie durch die mobile Inspektionsvorrichtung des Kontrolleurs auslesbar sein können. Die mobile Inspektionsvorrichtung kann dazu mit einem entsprechenden Scanner-Modul für optische Codes und/oder mit einer Kamera ausgestattet sein.

Der optische Code, dessen Dateninhalt gemäß dem zuvor Gesagten auch Daten beinhalten kann, die die Identifikation des Nutzers im Hintergrundsystem darstellen, kann dabei insbesondere genutzt werden, damit ein Kontrolleur die Daten eines Nutzers erfassen kann, der die Transportdienstleistung illegitim nutzt. Diese Daten kann die mobile Inspektionsvorrichtung des Kontrolleurs an das Hintergrundsystem weiterleiten, insbesondere zur Weiterverfolgung des Vorgangs gemäß den Nutzungsbedingungen.

Es versteht sich, dass ein illegitimer Nutzer, der überhaupt kein mobiles Nutzerendgerät bei sich trägt oder dessen mobiles Nutzerendgerät gar keine Dienstleistungsnutzungsanwendung zur grundsätzlichen Nutzung der Dienstleistung installiert hat, auf andere Weise vom Kontrolleur erfasst werden kann.

Der optische Code kann weiter genutzt werden, um die Daten eines Nutzers, der sich erfolglos am Hintergrundsystem angemeldet hat, durch die mobile Inspektionsvorrichtung des Kontrolleurs an das Hintergrundsystem zu übertragen.

## Patentansprüche

1. Kontrollverfahren zum Überprüfen einer Nutzerberechtigung eines Nutzers für die Inanspruchnahme einer Dienstleistung, insbesondere einer Transportdienstleistung, wobei das Kontrollverfahren während eines Inspektionsprozesses durchgeführt wird, umfassend:
- Aussenden, durch eine mobile Inspektionsvorrichtung (124, 224), mindestens eines ersten Inspektionsdatensatzes während einer ersten Sendephase,
- Empfangen, durch mindestens ein zu kontrollierendes mobiles Nutzerendgerät (104, 204, 404), des mindestens einen ersten Inspektionsdatensatzes,
- Ausgeben, durch mindestens ein erstes Ausgabemodul (106, 206, 406) des mobilen Nutzerendgeräts (104, 204, 404), mindestens eines ersten Inspektionsmerkmals (230) während der ersten Sendephase, basierend auf dem empfangenen ersten Inspektionsdatensatz und mindestens einer in dem mobilen Nutzerendgerät (104, 204, 404) verfügbaren Nutzerberechtigungsinformation, wobei das Empfangen des ersten Inspektionsdatensatzes auf einem mobilen Nutzerendgerät, bei dem eine gültige Nutzerberechtigungsinformation verfügbar ist, das Abspielen einer ersten grafischen Sequenz und/oder einer akustischen Sequenz als erstes Inspektionsmerkmal auslöst, und
- Ausgeben, durch mindestens ein zweites Ausgabemodul (126, 226) der mobilen Inspektionsvorrichtung (124, 224), mindestens eines ersten zu dem ersten Inspektionsdatensatz korrespondierenden Gültigkeitsmerkmals (246) während der ersten Sendephase,
- wobei eine Berechtigung eines Nutzers für die Inanspruchnahme einer Dienstleistung überprüfbar ist durch einen Vergleich der während der ersten Sendephase von dem mindestens einen mobilen Nutzerendgerät ausgegebenen Inspektionsmerkmal und dem mindestens einen durch die mobile Inspektionsvorrichtung ausgegebenen Gültigkeitsmerkmal.

2. Kontrollverfahren nach Anspruch 1, **wobei** das Verfahren umfasst
- Aussenden, durch die mobile Inspektionsvorrichtung (124, 224), mindestens eines zweiten Inspektionsdatensatzes während einer sich an die erste Sendephase anschließenden zweiten Sendephase,
- Empfangen, durch mindestens das mobile Nutzerendgerät (104, 204, 404), des mindestens einen zweiten Inspektionsdatensatzes,
- Ausgeben, durch das erste Ausgabemodul (106, 206, 406), mindestens eines zweiten Inspektionsmerkmals (230) während der zweiten Sendephase, basierend auf dem empfangenen zweiten Inspektionsdatensatz und der in dem mobilen Nutzenendgerät (104, 204, 404) verfügbaren Nutzerberechtigungsinformation, und
- Ausgeben, durch das zweite Ausgabemodul (126, 226), mindestens eines zweiten zu dem zweiten Inspektionsdatensatz korrespondierenden Gültigkeitsmerkmals (246) während der zweiten Sendephase.

3. Kontrollverfahren nach Anspruch 1 oder 2, **wobei**
- die zeitliche Länge einer Sendephase durch einen Zufallsgenerator der mobilen Inspektionsvorrichtung (124, 224) gesteuert wird, und/oder
- die zeitliche Länge einer Sendephase in Reaktion auf eine detektierte Betätigung mindestens eines Nutzereingabemoduls (244) der mobilen Inspektionsvorrichtung (124, 224) gesteuert wird.

4. Kontrollverfahren nach einem der vorherigen Ansprüche, **wobei**
- ein durch das erste Ausgabemodul (106, 206, 406) ausgegebenes Inspektionsmerkmal (230) bei einer verfügbaren gültigen Nutzerberechtigungsinformation zu dem durch das zweite Ausgabemodul (126, 226) ausgegebenen Gültigkeitsmerkmal (246) gleichartig ist, , und/oder
- ein durch das erste Ausgabemodul (106, 206, 406) ausgegebenes Inspektionsmerkmal (230) bei einer verfügbaren ungültigen Nutzerberechtigungsinformation von dem durch das zweite Ausgabemodul (126, 226) ausgegebenen Gültigkeitsmerkmal (246) in mindestens einem ersten Merkmalsattribut abweicht, und/oder
- ein durch das erste Ausgabemodul (106, 206, 406) ausgegebenes Inspektionsmerkmal (230) bei einer verfügbaren semigültigen Nutzerberechtigungsinformation von dem durch das zweite Ausgabemodul (126, 226) ausgegebenen Gültigkeitsmerkmal (246) in mindestens einem zweiten Merkmalsattribut abweicht, wobei eine semigültige Nutzerberechtigungsinformation vorliegt, wenn in dem mobilen Nutzerendgerät ein oder mehrere Anmeldeversuch/e bei einem Raumerfassungssystem gespeichert sind.

5. Kontrollverfahren nach einem der vorherigen Ansprüche, **wobei**
- ein Inspektionsmerkmal (230) ein grafisches Inspektionsmerkmal (230) in Form einer grafischen Sequenz und/oder ein akustisches Inspektionsmerkmal in Form einer akustischen Sequenz ist, und/oder
- ein Gültigkeitsmerkmal (246) ein grafisches Gültigkeitsmerkmal (246) in Form einer grafischen Sequenz und/oder ein akustisches Gültigkeitsmerkmal in Form einer akustischen Sequenz ist.

6. Kontrollverfahren nach einem der vorherigen Ansprüche, **wobei**
- ein Inspektionsmerkmal (230) eine grafische Sequenz und/oder eine akustische Sequenz ist, die aus einer Mehrzahl von Merkmalsattributen (232, 234, 236) gebildet wird,
- die Mehrzahl von Merkmalsattributen (232, 234, 236) in eine Mehrzahl von Klassen eingestuft werden, und
- die Mehrzahl von Klassen insbesondere zumindest zwei der folgenden Klassen umfasst:
- Form des mindestens eines anzuzeigenden Objekts,
- Größe des mindestens einen anzuzeigenden Objekts,
- Farbe des mindestens einen anzuzeigenden Objekts,
- Bewegungsmuster des mindestens einen anzuzeigenden Objekts,
- Bewegungsgeschwindigkeit des mindestens einen anzuzeigenden Objekts,
- Hintergrundfarbe,
- Ton oder Tonfolge.

7. Kontrollverfahren nach Anspruch 6, **wobei**
- ein Inspektionsdatensatz eine Mehrzahl von Inspektionsinstruktionen umfasst, wobei eine Inspektionsinstruktion ein bestimmter Code ist,
- in dem mobilen Nutzerendgerät (104, 204, 404) eine Mehrzahl von Merkmalsattribute gespeichert sind, wobei jedem Merkmalsattribut eine Inspektionsinstruktion zugeordnet ist, und
- die grafische Sequenz und/oder akustische Sequenz basierend auf den Inspektionsinstruktionen eines empfangenen Inspektionsdatensatz gebildet wird.

8. Kontrollverfahren nach Anspruch 7, **wobei** die Zuordnung einer Inspektionsinstruktion zu einem Merkmalsattribut von einem Gültigkeitszustand der Nutzerberechtigungsinformation abhängt.

9. Kontrollverfahren nach einem der vorherigen Ansprüche, **wobei**
- vor der ersten Sendephase während einer Kontrollstartphase ein Kontrolldatensatz ausgesendet wird,
- bei einem Empfang des Kontrolldatensatzes durch mindestens ein mobiles Nutzerendgerät (104, 204, 404) das mindestens eine mobile Nutzerendgerät (104, 204, 404) in einen Kontrollmodus gesetzt wird, wobei in dem Kontrollmodus eine Anmeldung oder der Erwerb eines Tickets oder die Entwertung eines Tickets blockiert ist.

10. Kontrollverfahren nach einem der vorherigen Ansprüche, **wobei**
- durch die mobile Inspektionsvorrichtung (124, 224) mindestens ein Referenzticketdatensatz zusammen mit einem Inspektionsdatensatz ausgesendet wird, und
- das Ausgeben, durch das erste Ausgabemodul (106, 206, 406), eines Inspektionsmerkmals (230) ferner auf dem empfangenen Referenzticketdatensatz basiert.

11. System (100), umfassend:
- mindestens eine mobile Inspektionsvorrichtung (124, 224) und mindestens ein zu kontrollierendes mobiles Nutzerendgerät (104, 204, 404),
- wobei die mobile Inspektionsvorrichtung (124, 224) eingerichtet ist zum Aussenden mindestens eines ersten Inspektionsdatensatzes während einer ersten Sendephase,
- wobei mindestens ein Kommunikationsmodul (107) des mobilen Nutzerendgeräts (104, 204, 404) eingerichtet ist zum Empfangen des mindestens einen ersten Inspektionsdatensatzes,
- wobei mindestens ein erstes Ausgabemodul (106, 206, 406) des mobilen Nutzerendgeräts (104, 204, 404) eingerichtet ist zum Ausgeben mindestens eines ersten Inspektionsmerkmals (230) während der ersten Sendephase, basierend auf dem empfangenen ersten Inspektionsdatensatz und mindestens einer in dem mobilen Nutzerendgerät (104, 204, 404) verfügbaren Nutzerberechtigungsinformation, wobei das Empfangen des ersten Inspektionsdatensatzes auf einem mobilen Nutzerendgerät, bei dem eine gültige Nutzerberechtigungsinformation verfügbar ist, das Abspielen einer ersten grafischen Sequenz und/oder einer akustischen Sequenz als erstes Inspektionsmerkmal auslöst,
- wobei mindestens ein zweites Ausgabemodul (126, 226) der mobilen Inspektionsvorrichtung (124, 224) eingerichtet ist zum Ausgeben mindestens eines ersten zu dem ersten Inspektionsdatensatz korrespondierenden Gültigkeitsmerkmals (246) während der ersten Sendephase,
- wobei eine Berechtigung eines Nutzers für die Inanspruchnahme einer Dienstleistung überprüfbar ist durch einen Vergleich der während der ersten Sendephase von dem mindestens einen mobilen Nutzerendgerät ausgegebenen Inspektionsmerkmal und dem mindestens einen durch die mobile Inspektionsvorrichtung ausgegebenen Gültigkeitsmerkmal.

12. Mobile Inspektionsvorrichtung (124, 224), umfassend:
- mindestens ein Kommunikationsmodul (128), eingerichtet zum Aussenden mindestens eines ersten Inspektionsdatensatzes während einer ersten Sendephase,
- wobei der erste Inspektionsdatensatz eingerichtet ist zum Bewirken eines Ausgebens, durch mindestens ein erstes Ausgabemodul (106, 206, 406) des mobilen Nutzerendgeräts (104, 204, 404), mindestens eines ersten Inspektionsmerkmals (230) während der ersten Sendephase, basierend auf dem empfangenen ersten Inspektionsdatensatz und mindestens einer in dem mobilen Nutzerendgerät (104, 204, 404) verfügbaren Nutzerberechtigungsinformation, wobei das Empfangen des ersten Inspektionsdatensatzes auf einem mobilen Nutzerendgerät, bei dem eine gültige Nutzerberechtigungsinformation verfügbar ist, das Abspielen einer ersten grafischen Sequenz und/oder einer akustischen Sequenz als erstes Inspektionsmerkmal auslöst,
- mindestens ein zweites Ausgabemodul (126, 226), eingerichtet zum Ausgeben mindestens eines ersten zu dem ersten Inspektionsdatensatz korrespondierenden Gültigkeitsmerkmals (246) während der ersten Sendephase,
- wobei eine Berechtigung eines Nutzers für die Inanspruchnahme einer Dienstleistung überprüfbar ist durch einen Vergleich der während der ersten Sendephase von dem mindestens einen mobilen Nutzerendgerät ausgegebenen Inspektionsmerkmal und dem mindestens einen durch die mobile Inspektionsvorrichtung ausgegebenen Gültigkeitsmerkmal.

13. Verfahren zum Betreiben einer mobilen Inspektionsvorrichtung (124, 224) nach Anspruch12, umfassend:
- Aussenden, durch die mobile Inspektionsvorrichtung (124, 224), mindestens eines ersten Inspektionsdatensatzes während einer ersten Sendephase,
- wobei der erste Inspektionsdatensatz eingerichtet ist zum Bewirken eines Ausgebens, durch mindestens ein erstes Ausgabemodul (106, 206, 406) des mobilen Nutzerendgeräts (104, 204, 404), mindestens eines ersten Inspektionsmerkmals (230) während der ersten Sendephase, basierend auf dem empfangenen ersten Inspektionsdatensatz und mindestens einer in dem mobilen Nutzerendgerät (104, 204, 404) verfügbaren Nutzerberechtigungsinformation,
- Ausgeben, durch ein zweites Ausgabemodul (126, 226) der mobilen Inspektionsvorrichtung (124, 224), mindestens eines ersten zu dem ersten Inspektionsdatensatz korrespondierenden Gültigkeitsmerkmals (246) während der ersten Sendephase.

14. Dienstleistungsnutzungsanwendung (108, 109), insbesondere Raumerfassungsanwendung (108), zur Installation auf einem mobilen Nutzerendgerät (104, 204, 404), umfassend:
- mindestens ein Empfangsmodul (120, 121), eingerichtet zum Empfangen mindestens eines ersten, durch eine mobile Inspektionsvorrichtung (124, 224) während einer ersten Sendephase ausgesendeten Inspektionsdatensatzes,
- mindestens ein Verarbeitungsmodul (122, 123), eingerichtet zum Bewirken eines Ausgebens, durch mindestens ein erstes Ausgabemodul (106, 206, 406) des mobilen Nutzerendgeräts (104, 204, 404), mindestens eines ersten Inspektionsmerkmals (230) während der ersten Sendephase, basierend auf dem empfangenen ersten Inspektionsdatensatz und mindestens einer in dem mobilen Nutzerendgerät (104, 204, 404) verfügbaren Nutzerberechtigungsinformation,
- wobei das Empfangen des ersten Inspektionsdatensatzes auf einem mobilen Nutzerendgerät, bei dem eine gültige Nutzerberechtigungsinformation verfügbar ist, das Abspielen einer ersten grafischen Sequenz und/oder einer akustischen Sequenz als erstes Inspektionsmerkmal auslöst,
- wobei eine Berechtigung eines Nutzers für die Inanspruchnahme einer Dienstleistung überprüfbar ist durch einen Vergleich der während der ersten Sendephase von dem mindestens einen mobilen Nutzerendgerät ausgegebenen Inspektionsmerkmal und dem mindestens einen durch die mobile Inspektionsvorrichtung ausgegebenen Gültigkeitsmerkmal.

## Claims

1. An inspection method for verifying a user authorization for using a service, in particular a transport service, wherein the inspection method is carried out during an inspection process, comprising:
- sending, by a mobile inspection device (124, 224), at least one first inspection data set during a first transmission phase,
- receiving, by at least one mobile user terminal (104, 204, 404) to be inspected, the at least one first inspection data set,
- outputting, by at least one first output module (106, 206, 406) of the mobile user terminal (104, 204, 404), at least one first inspection feature (230) during the first transmission phase, based on the received first inspection data set and at least one user authorization information available in the mobile user terminal (104, 204, 404), wherein receiving the first inspection data set on a mobile user terminal, at which a valid user authorization information is available, triggers the playing of a first graphical sequence and/or an acoustic sequence as the first inspection feature, and
- outputting, by at least one second output module (126, 226) of the mobile inspection device (124, 224), at least one first validity feature (246) corresponding to the first inspection data set during the first transmission phase,
- wherein an authorization of a user for using a service is verifiable by comparing the inspection feature output by the at least one mobile user terminal during the first transmission phase and the at least one validity feature output by the mobile inspection device.

2. The inspection method according to claim 1, wherein the method comprises
- sending, by the mobile inspection device (124, 224), at least one second inspection data set during a second transmission phase subsequent to the first transmission phase,
- receiving, by at least the mobile user terminal (104, 204, 404), the at least one second inspection data set,
- outputting, by the first output module (106, 206, 406), at least one second inspection feature (230) during the second transmission phase, based on the received second inspection data set and the user authorization information available in the mobile user terminal (104, 204, 404), and
- outputting, by the second output module (126, 226), at least one second validity feature (246) corresponding to the second inspection data set during the second transmission phase.

3. The inspection method according to claim 1 or 2, wherein
- the temporal length of a transmission phase is controlled by a random generator of the mobile inspection device (124, 224),
and/or
- the temporal length of a transmission phase is controlled in response to a detected actuation of at least one user input module (244) of the mobile inspection device (124, 224).

4. The inspection method according to any one of the preceding claims, wherein
- an inspection feature (230) output by the first output module (106, 206, 406) is similar to the validity feature (246) output by the second output module (126, 226) for an available valid user authorization information,
and/or
- an inspection feature (230) output by the first output module (106, 206, 406) differs from the validity feature (246) output by the second output module (126, 226) in at least one first feature attribute for an available invalid user authorization information,
and/or
- an inspection feature (230) output by the first output module (106, 206, 406) differs from the validity feature (246) output by the second output module (126, 226) in at least one second feature attribute for an available semi-valid user authorization information, wherein a semi-valid user authorization information is provided if one or more login attempts to a room detection system are stored in the mobile user terminal.

5. The inspection method according to any one of the preceding claims, wherein
- an inspection feature (230) is a graphical inspection feature (230) in the form of a graphical sequence and/or an acoustic inspection feature in the form of an acoustic sequence,
and/or
- a validity feature (246) is a graphical validity feature (246) in the form of a graphical sequence and/or an acoustic validity feature in the form of an acoustic sequence.

6. The inspection method according to any one of the preceding claims, wherein
- an inspection feature (230) is a graphical sequence and/or an acoustic sequence formed from a plurality of feature attributes (232, 234, 236),
- the plurality of feature attributes (232, 234, 236) are classified in a plurality of classes, and
- the plurality of classes comprises, in particular, at least two of the following classes:
- shape of at least one object to be displayed,
- size of the at least one object to be displayed,
- color of the at least one object to be displayed,
- motion pattern of the at least one object to be displayed,
- speed of movement of the at least one object to be displayed,
- background color,
- tone or sequence of tones.

7. The inspection method according to claim 6, wherein
- an inspection data set comprises a plurality of inspection instructions, wherein an inspection instruction is a specific code,
- a plurality of feature attributes are stored in the mobile user terminal (104, 204, 404), wherein an inspection instruction is assigned with each feature attribute; and
- the graphical sequence and/or acoustic sequence is formed based on the inspection instructions of a received inspection data set.

8. The inspection method according to claim 7, wherein the assignment of an inspection instruction to a feature attribute depends on a validity state of the user authorization information.

9. The inspection method according to any one of the preceding claims, wherein
- an inspection data set is sent out during an inspection start phase before the first transmission phase,
- upon receipt of the inspection data set by at least one mobile user terminal (104, 204, 404), the at least one mobile user terminal (104, 204, 404) is placed in an inspection mode, wherein in the inspection mode, a check-in or the purchase of a ticket or validation of a ticket is blocked.

10. The inspection method according to any one of the preceding claims, wherein
- at least one reference ticket data set is sent by the mobile inspection device (124, 224) together with an inspection data set, and
- the outputting, by the first output module (106, 206, 406), of an inspection feature (230) is further based on the received reference ticket data set.

11. A system (100), comprising:
- at least one mobile inspection device (124, 224) and at least one mobile user terminal (104, 204, 404) to be inspected,
- wherein the mobile inspection device (124, 224) is configured to transmit at least one first inspection data set during a first transmission phase,
- wherein at least one communication module (107) of the mobile user terminal (104, 204, 404) is configured to receive the at least one first inspection data set,
- wherein at least one first output module (106, 206, 406) of the mobile user terminal (104, 204, 404) is configured to output at least one first inspection feature (230) during the first transmission phase based on the received first inspection data set and at least one user authorization information available in the mobile user terminal (104, 204, 404), wherein receiving the first inspection data set on a mobile user terminal at which a valid user authorization information is available triggers the playing of a first graphical sequence and/or an acoustic sequence as a first inspection feature,
- wherein at least one second output module (126, 226) of the mobile inspection device (124, 224) is configured to output at least one first validity feature (246) corresponding to the first inspection data set during the first transmission phase,
- wherein an authorization of a user for using a service is verifiable by comparing the inspection feature output by the at least one mobile user terminal during the first transmission phase and the at least one validity feature output by the mobile inspection device.

12. A mobile inspection device (124, 224), comprising:
- at least one communication module (128) configured to transmit at least one first inspection data set during a first transmission phase,
- wherein the first inspection data set is configured to cause an outputting, by at least one first output module (106, 206, 406) of the mobile user terminal (104, 204, 404), of at least one first inspection feature (230) during the first transmission phase, based on the received first inspection data set and at least one user authorization information available in the mobile user terminal (104, 204, 404), wherein receiving the first inspection data set on a mobile user terminal at which a valid user authorization information is available triggers playing of a first graphical sequence and/or an acoustic sequence as a first inspection feature,
- at least one second output module (126, 226) configured to output at least one first validity feature (246) corresponding to the first inspection data set during the first transmission phase,
- wherein a user authorization for using a service is verifiable by comparing the inspection feature output by the at least one mobile user terminal during the first transmission phase and the at least one validity feature output by the mobile inspection device.

13. A method of operating a mobile inspection apparatus (124, 224) according to claim12, comprising:
- sending, by the mobile inspection device (124, 224), at least one first inspection data set during a first transmission phase,
- wherein the first inspection data set is configured to cause an outputting, by at least one first output module (106, 206, 406) of the mobile user terminal (104, 204, 404), of at least one first inspection feature (230) during the first transmission phase, based on the received first inspection data set and at least user authorization information available in the mobile user terminal (104, 204, 404),
- outputting, by a second output module (126, 226) of the mobile inspection device (124, 224), at least one first validity feature (246) corresponding to the first inspection data set during the first transmission phase.

14. A service utilization application (108, 109), in particular a room detection application (108), for installation on a mobile user terminal (104, 204, 404), comprising:
- at least one receiving module (120, 121) configured to receive at least one first inspection data set sent by a mobile inspection device (124, 224) during a first transmission phase,
- at least one processing module (122, 123) configured to cause an outputting, by at least one first output module (106, 206, 406) of the mobile user terminal (104, 204, 404), of at least one first inspection feature (230) during the first transmission phase, based on the received first inspection data set and at least one user authorization information available in the mobile user terminal (104, 204, 404),
- wherein receiving the first inspection data set on a mobile user terminal at which a valid user authorization information is available triggers playing of a first graphical sequence and/or an acoustic sequence as a first inspection feature,
- wherein a user authorization for using a service is verifiable by comparing the inspection feature output by the at least one mobile user terminal during the first transmission phase and the at least one validity feature output by the mobile inspection device.

## Revendications

1. Procédé de contrôle pour vérifier une autorisation d'utilisateur d'un utilisateur pour l'utilisation d'un service, en particulier d'un service de transport, où le procédé de contrôle est effectué pendant un processus d'inspection, comprenant :
- émettre, par un dispositif d'inspection mobile (124, 224), au moins un premier ensemble de données d'inspection pendant une première phase d'émission,
- recevoir, par au moins un terminal d'utilisateur mobile (104, 204, 404) à contrôler, l'au moins un premier ensemble de données d'inspection,
- sortir, par au moins un premier module de sortie (106, 206, 406) du terminal d'utilisateur mobile (104, 204, 404), au moins une première caractéristique d'inspection (230) pendant la première phase d'émission, sur la base du premier ensemble de données d'inspection reçu et d'au moins une donnée d'autorisation d'utilisateur disponible dans le terminal d'utilisateur mobile (104, 204, 404), où la réception du premier ensemble de données d'inspection sur un terminal d'utilisateur mobile dans lequel une information d'autorisation d'utilisateur valide est disponible déclenche la présentation d'une première séquence graphique et/ou d'une séquence acoustique comme première caractéristique d'inspection, et
- sortir, par au moins un deuxième module de sortie (126, 226) du dispositif d'inspection mobile (124, 224), au moins une première caractéristique de validité (246) correspondant au premier ensemble de données d'inspection pendant la première phase d'émission,
- où une autorisation d'un utilisateur pour l'utilisation d'un service est vérifiable par une comparaison de la caractéristique d'inspection sortie pendant la première phase d'émission par le au moins un terminal d'utilisateur mobile et l'au moins une caractéristique de validité émise par le dispositif d'inspection mobile.

2. Procédé de contrôle selon la revendication 1, **où** le procédé comprend
- émettre, par le dispositif d'inspection mobile (124, 224), au moins un deuxième ensemble de données d'inspection pendant une deuxième phase d'émission suivant la première phase d'émission,
- recevoir, par au moins le terminal d'utilisateur mobile (104, 204, 404), l'au moins un deuxième ensemble de données d'inspection,
- sortir, par le premier module de sortie (106, 206, 406), au moins une deuxième caractéristique d'inspection (230) pendant la deuxième phase d'émission, sur la base du deuxième ensemble de données d'inspection reçu et des informations d'autorisation d'utilisateur disponibles dans le terminal d'utilisateur mobile (104, 204, 404), et
- sortir, par le deuxième module de sortie (126, 226), au moins une deuxième caractéristique de validité (246) correspondant au deuxième ensemble de données d'inspection pendant la deuxième phase d'émission.

3. Procédé de contrôle selon la revendication 1 ou 2, **où**
- la longueur temporelle d'une phase d'émission est contrôlée par un générateur aléatoire du dispositif d'inspection mobile (124, 224), et/ou
- la longueur temporelle d'une phase d'émission est contrôlée en réponse à un actionnement détecté d'au moins un module d'entrée utilisateur (244) du dispositif d'inspection mobile (124, 224).

4. Procédé de contrôle selon l'une des revendications précédentes, **où**
- une caractéristique d'inspection (230) sortie par le premier module de sortie (106, 206, 406) est similaire à la caractéristique de validité (246) sortie par le deuxième module de sortie (126, 226), pour une information d'autorisation d'utilisateur disponible est valide,
et/ou
- une caractéristique d'inspection (230) sortie par le premier module de sortie (106, 206, 406) diffère de la caractéristique de validité (246) sortie par le deuxième module de sortie (126, 226) dans au moins un premier attribut de caractéristique, pour une information d'autorisation d'utilisateur disponible qui est invalide,
et/ou
- une caractéristique d'inspection (230) sortie par le premier module de sortie (106, 206, 406) diffère, pour une information d'autorisation d'utilisateur disponible qui est semi-valide, de la caractéristique de validité (246) sortie par le deuxième module de sortie (126, 226) dans au moins un deuxième attribut de caractéristique, où une information d'autorisation d'utilisateur semi-valide est présente quand une ou plusieurs tentatives de connexion à un système de saisie de locaux sont stockées dans le terminal d'utilisateur mobile.

5. Procédé de contrôle selon l'une des revendications précédentes, **où**
- une caractéristique d'inspection (230) est une caractéristique d'inspection graphique (230) sous la forme d'une séquence graphique et/ou une caractéristique d'inspection acoustique sous la forme d'une séquence acoustique,
et/ou
- une caractéristique de validité (246) est une caractéristique de validité graphique (246) sous la forme d'une séquence graphique et/ou une caractéristique de validité acoustique sous la forme d'une séquence acoustique.

6. Procédé de contrôle selon l'une des revendications précédentes, **où**
- une caractéristique d'inspection (230) est une séquence graphique et/ou une séquence acoustique formée d'une pluralité d'attributs de caractéristiques (232, 234, 236),
- la pluralité d'attributs de caractéristiques (232, 234, 236) sont classés dans une pluralité de classes, et
- la pluralité de classes comprend en particulier au moins deux des classes suivantes :
- forme de l'au moins un objet à afficher,
- taille de l'au moins un objet à afficher,
- couleur de l'au moins un objet à afficher,
- modèle de mouvement de l'au moins un objet à afficher,
- vitesse de déplacement de l'au moins un objet à afficher,
- couleur de fond,
- son ou séquence de sons.

7. Procédé de contrôle selon la revendication 6, **où**
- un ensemble de données d'inspection comprend une pluralité d'instructions d'inspection, où une instruction d'inspection est un code défini,
- dans le terminal d'utilisateur mobile (104, 204, 404), une pluralité d'attributs de caractéristiques sont stockés, où chaque attribut de caractéristique est associé à une instruction d'inspection, et
- la séquence graphique et/ou la séquence acoustique est formée sur la base des instructions d'inspection d'un ensemble de données d'inspection reçu.

8. Procédé de contrôle selon la revendication 7, **où** l'association d'une instruction d'inspection à un attribut de caractéristique dépend d'un état de validité des informations d'autorisation d'utilisateur.

9. Procédé de contrôle selon l'une des revendications précédentes, **où**
- avant la première phase d'émission, un ensemble de contrôle est émis pendant une phase de démarrage de contrôle,
- lors d'une réception de l'ensemble de données de contrôle par au moins un terminal d'utilisateur mobile (104, 204, 404), l'au moins un terminal d'utilisateur mobile (104, 204, 404) est mis dans un mode de contrôle, où, dans le mode de contrôle, une connexion ou l'acquisition d'un ticket ou la validation d'un ticket est bloquée.

10. Procédé de contrôle selon l'une des revendications précédentes, **où**
- par le dispositif d'inspection mobile (124, 224), au moins un ensemble de données de ticket de référence est émis ensemble avec un ensemble de données d'inspection, et
- la sortie, par le premier module de sortie (106, 206, 406), d'une caractéristique d'inspection (230) est en outre basée sur l'ensemble de données de ticket de référence reçu.

11. Système (100), comprenant:
- au moins un dispositif d'inspection mobile (124, 224) et au moins un terminal utilisateur mobile (104, 204, 404) à contrôler,
- où le dispositif d'inspection mobile (124, 224) est configuré pour émettre au moins un premier ensemble de données d'inspection pendant une première phase d'émission,
- où au moins un module de communication (107) du terminal d'utilisateur mobile (104, 204, 404) est configuré pour recevoir l'au moins un premier ensemble de données d'inspection,
- où au moins un premier module de sortie (106, 206, 406) du terminal d'utilisateur mobile (104, 204, 404) est configuré pour émettre au moins une première caractéristique d'inspection (230) pendant la première phase d'émission, sur la base du premier ensemble de données d'inspection reçu et d'au moins une donnée d'autorisation d'utilisateur disponible dans le terminal d'utilisateur mobile (104, 204, 404), 204, 404), où la réception du premier ensemble de données d'inspection sur un terminal d'utilisateur mobile, dans lequel une information d'autorisation d'utilisateur valide est disponible, déclenche la présentation d'une première séquence graphique et/ou d'une séquence acoustique comme première caractéristique d'inspection,
- où au moins un deuxième module de sortie (126, 226) du dispositif d'inspection mobile (124, 224) est configuré pour sortir au moins une première caractéristique de validité (246) correspondant au premier ensemble de données d'inspection pendant la première phase d'émission,
- où une autorisation d'un utilisateur pour l'utilisation d'un service est vérifiable par une comparaison de la caractéristique d'inspection sortie pendant la première phase d'émission par le au moins un terminal d'utilisateur mobile et l'au moins une caractéristique de validité sortie par le dispositif d'inspection mobile.

12. Dispositif d'inspection mobile (124, 224), comprenant:
- au moins un module de communication (128), configuré pour émettre au moins un premier ensemble de données d'inspection pendant une première phase d'émission,
- où le premier ensemble de données d'inspection est configuré pour provoquer la sortie, par au moins un premier module de sortie (106, 206, 406) du terminal d'utilisateur mobile (104, 204, 404), d'au moins une première caractéristique d'inspection (230) pendant la première phase d'émission, sur la base du premier ensemble de données d'inspection reçu et d'au moins une information d'identification d'utilisateur disponible dans le terminal d'utilisateur mobile (104, 204, 404), 204, 404), où la réception du premier ensemble de données d'inspection sur un terminal d'utilisateur mobile dans lequel une information d'autorisation d'utilisateur valide est disponible, déclenche la lecture d'une première séquence graphique et/ou d'une séquence acoustique comme première caractéristique d'inspection,
- au moins un deuxième module de sortie (126, 226), configuré pour émettre au moins une première caractéristique de validité (246) correspondant au premier ensemble d'inspection pendant la première phase d'émission,
- où une autorisation d'un utilisateur pour l'utilisation d'un service est vérifiable par une comparaison de la caractéristique d'inspection sortie pendant la première phase d'émission par le au moins un terminal d'utilisateur mobile et l'au moins une caractéristique de validité sortie par le dispositif d'inspection mobile.

13. Procédé de fonctionnement d'un dispositif d'inspection mobile (124, 224) selon la revendication12, comprenant
- émettre, par le dispositif d'inspection mobile (124, 224), au moins un premier ensemble de données d'inspection pendant une première phase d'émission,
- où le premier ensemble de données d'inspection est configuré pour provoquer la sortie, par au moins un premier module de sortie (106, 206, 406) du terminal d'utilisateur mobile (104, 204, 404), d'au moins une première caractéristique d'inspection (230) pendant la première phase de transmission, sur la base du premier ensemble de données d'inspection reçu et d'au moins une information d'autorisation d'utilisateur disponible dans le terminal d'utilisateur mobile (104, 204, 404),
- sortir, par un deuxième module de sortie (126, 226) du dispositif d'inspection mobile (124, 224), au moins une première caractéristique de validité (246) correspondant au premier ensemble de données d'inspection pendant la première phase d'émission.

14. Application d'utilisation de services (108, 109), en particulier application de saisie d'espace (108), destinée à être installée sur un terminal d'utilisateur mobile (104, 204, 404), comprenant:
- au moins un module de réception (120, 121), configuré pour recevsoir au moins un premier ensemble de données d'inspection émis par un dispositif d'inspection mobile (124, 224) pendant une première phase d'émission,
- au moins un module de traitement (122, 123) configuré pour effectuer une sortie, par au moins un premier module de sortie (106, 206, 406) du terminal d'utilisateur mobile (104, 204, 404), d'au moins une première caractéristique d'inspection (230) pendant la première phase d'émission, sur la base du premier ensemble de données d'inspection reçu et d'au moins une information d'autorisation d'utilisateur disponible dans le terminal d'utilisateur mobile (104, 204, 404),
- où la réception du premier ensemble de données d'inspection sur un terminal d'utilisateur mobile, dans lequel une information d'autorisation d'utilisateur valide est disponible, déclenche la lecture d'une première séquence graphique et/ou d'une séquence acoustique comme première caractéristique d'inspection,
- où une autorisation d'un utilisateur pour l'utilisation d'un service est vérifiable par une comparaison de la caractéristique d'inspection sortie pendant la première phase d'émission par le au moins un terminal d'utilisateur mobile et l'au moins une caractéristique de validité sortie par le dispositif d'inspection mobile.
